(19) **Europäisches Patentamt / European Patent Office / Office européen des brevets**

(11) **EP 1 679 689 B1**

(12) # EUROPEAN PATENT SPECIFICATION

(45) Date of publication and mention
of the grant of the patent:
**01.01.2014  Bulletin 2014/01**

(51) Int Cl.:
**G06F 1/16** *(2006.01)*    **G06F 3/01** *(2006.01)*
**G09G 3/20** *(2006.01)*

(21) Application number: **04773146.8**

(22) Date of filing: **09.09.2004**

(86) International application number:
**PCT/JP2004/013487**

(87) International publication number:
**WO 2005/041167 (06.05.2005 Gazette 2005/18)**

(54) **IMAGE DISPLAY DEVICE AND IMAGE DISPLAY METHOD**

BILDANZEIGEEINRICHTUNG UND BILDANZEIGEVERFAHREN

AFFICHEUR D'IMAGES ET PROCEDE D'AFFICHAGE D'IMAGES

(84) Designated Contracting States:
**AT BE BG CH CY CZ DE DK EE ES FI FR GB GR HU IE IT LI LU MC NL PL PT RO SE SI SK TR**

(30) Priority: **28.10.2003  JP 2003367073**

(43) Date of publication of application:
**12.07.2006  Bulletin 2006/28**

(73) Proprietor: **Panasonic Corporation**
**Kadoma-shi**
**Osaka 571-8501 (JP)**

(72) Inventors:
• **KANAMORI, Katsuhiro**
**c/o Panasonic Corporation**
**Intellectual Property Center**
**Osaka 540-6207 (JP)**
• **MOTOMURA, Hideto**
**c/o Panasonic Corporation**
**Intellectual Prperty Center**
**Osaka 540-6207 (JP)**

• **KOMOBUCHI, Hiroyoshi**
**c/o Panasonic Corporation**
**Intellectual Property Center**
**Osaka 540-6207 (JP)**

(74) Representative: **Pautex Schneider, Nicole Véronique et al**
**Novagraaf International SA**
**Chemin de l'Echo 3**
**1213 Onex (CH)**

(56) References cited:
WO-A1-01/27735     JP-A- 7 181 939
JP-A- 8 212 323     JP-A- 01 277 286
JP-A- 04 070 899     JP-A- 04 198 985
JP-A- 05 225 313     JP-A- 06 068 237
JP-A- 07 044 143     JP-A- 07 181 939
JP-A- 08 212 323     JP-A- 09 084 000
JP-A- 2004 191 642     JP-A- 2004 302 500
US-A1- 2002 060 691     US-A1- 2002 060 691
US-A1- 2002 140 666

EP 1 679 689 B1

## Description

### Technical Field

The present invention relates to an image display and image reproduction technology, and particularly relates to an image display device and an image display method for displaying a textually rich image of an image of a subject to a viewer.

### Background Art

In recent years, online shopping (Electric Commerce, EC) using a computer via Internet has been becoming more popular because of diffusion of broadband high-speed lines such as Asymmetric Digital Subscriber Line (ADSL) and optic fiber. Moreover, in progressing of digital terrestrial television, EC in the shape of uniting an ordinary broadcasting such as a drama image and a shopping is imagined to be realized in digital television, and is anticipated to be established as a killer application in the near future. Such a convenience of online shopping means that it is possible to perform from ordering until receiving the ordered product at home.

However a user is not able to view and confirm the actual product firsthand in online shopping. On this account, even though a note stating "the actual product may appear different from what is shown in the image" is put in many shopping sites, complaints and returned products are still many. As a matter of fact, showing texturally rich image as possible on the user's display has been anticipated.

Now with regard to the size of the display which being used by user is about 17 inches and more for computer and digital television while about 2 to 4 inches of mobile type display for mobile information processing devices such as Personal Digital Assistance (PDA) and cellular phone in above mentioned online shopping. The  usage ratio of such a mobile type display is imagined to increase more and more in the future.

It is, therefore, an important subjective to show the product in online shopping in high quality on such a small mobile type display, and various ideas have been carried out.

For example in the case where a viewer holding a mobile display moves three-dimensionally, the display device is able to detect the movement using such as acceleration sensor, and to change the image to be shown actively so as to comprehend the entire relatively big size of image in the conventional image display device.

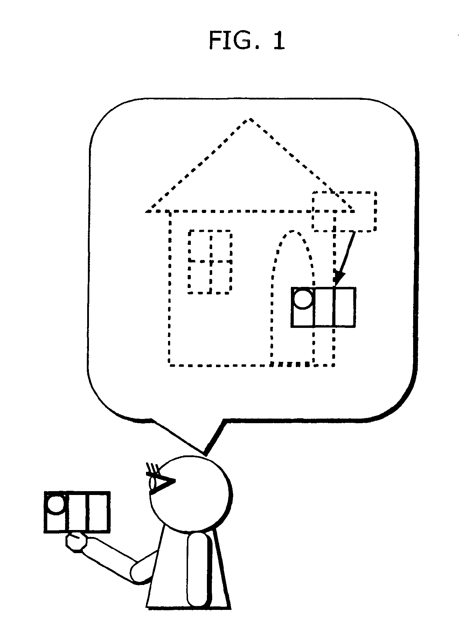

FIG. 1 is a drawing showing a using state of a conventional image display device, and an image display device 1701 is composed of a mobile display and a position detecting sensor. When a user holding image display device 1701 moves in a space, acceleration on two axes direction or three axes direction is detected by the position detecting sensor. It is indicated that a part of a building is shown on the image display device 1701 in FIG. 1, and it is possible to show the other parts of the building on the image display device 1701 by moving the image display device 1701.

Here a speed component and a displacement component are calculated by executing temporal integration after detecting the components in vertical direction and horizontal direction for acceleration of the image display device 1701 using the position detecting sensor with two directions by the conventional image display device. Accordingly, moving in two-dimensional direction enables to view a part of a big size of image such as newspaper and map by cutting out, and moving in three-dimensional direction, in other words, moving towards depth direction enables to, for example, comprehend the structure of each floor in a building for architectural purpose, and to inspect a brain scan image perceptively for medical purpose. (for example, refer to Japanese  Laid-Open Patent Application No. 2002-7027, page 4, FIG. 2)

Besides in order to comprehend an image of large volume with low-cost and usefully, there is an example of an effect that a user changes a display image for moving display toward the depth of the display, and zooming in or out the display image depending on the moving direction toward deep side or front side. According to this, a viewer is able to view a display of the image display unit as a window like moving around a three-dimensional space. (for example, refer to Japanese Laid-Open Patent Application No. 2000-66802, page 3, FIG. 1)

Additionally there is an image display method that plural numbers of images with different reflection conditions of a static subject by lighting are obtained, and the plural numbers of frame images are shown on the display in turn by switching the image display. In this example, it is described that a camera for viewer's monitoring is equipped in a display, and the display may show the image by switching over to the selected frame image depending on the eye view of viewer seeing the display. Instead of reading image, plural number of original images with different specular reflection condition of a static subject by lighting may be created using CG. (for example, refer to Japanese Laid-Open Patent Application No. 2003-132350, page 16, FIG. 6)

Moreover, there is an example that showing a big area by calculating a depth distance by detecting a viewer's view, operating a window and selecting a menu are performed on a mobile display equipping a small-sized camera. (for example Tomoya Narita, Yu Shibuya, Yoshihiro Tsujino "Display system possible to perform view control by user's view" Human Interface Society report Vol. 3, No. 3, pp. 11 to 14).

US 2002/0140666 disloses a device allowing a user to navigate a virtuel space by the motion of the device in real space.

However when a user performs online shopping using a mobile display, only easy image processing, that shows a bigger image than the display size, or zooms in or out with the mobile display, with conventional image display device, as feedback operation are available, even the user attempts in different operations. Such image processing is unable to realize a reality like holding and viewing an actual product, which being anticipated for online shopping and the like

For example, in the case where a user sees a knitted sweater, it is expected to show a product image of which the user is able to virtually feel the texture of wool.

Surface reflection characteristics that being varied depending on lighting, and a method showing simulated texture of textile weaving has been considering, yet such ways lack ideas including the size of subject and the distance between the user and the subject. It is therefore unable to realize a display of contrasting characteristics such as, for example, a) recognizing the entire image of the subject when viewing from afar, and b) equating the surface of the subject with the display screen and observing the surface texture as if being held directly in the viewer's hand, when viewing at close range.

Accordingly, in order to perform viewing the subject on a display holding by hand, it is not easy by a conventional desktop type display, it is, therefore, obvious that mobile type image display device is preferable. However conventionally it is difficult to show a lot of information on a small display area with the image display device equipping mobile display.

## Disclosure of Invention

In view of the aforesaid problem, it is an object of the present invention to provide an image display device and an image display method for displaying a product with the highest reality like seeing the product holding by hand for a viewer, even in an application such as online shopping using a small-sized portable display.

In order to achieve the aforesaid object, the image display device according to the present invention for displaying an image of a subject is defined in claim 1.

In this way, the user is able to comprehend the entire subject seeing the display as a window. Further, the subject can be seen with high reality like touching it by drawing the subject closer, so that the practicability of online shopping can be improved widely.

Here, the image display device may further preferably include an approaching state detecting unit to calculate a display magnification of the image based on the viewing distance.

In addition, the approaching state detecting unit may calculate the display magnification ratio (a) as one magnification, by assuming that the subject is located at a predetermined distance, in a case where the viewing distance is not greater than the predetermined distance, and (b) as less than one magnification, by assuming that the subject is located beyond the predetermined distance, in a case where the viewing distance is greater than the predetermined distance, and the display switching controlling unit may display the image of the subject in the first display mode in a case where the display magnification calculated by the approaching state detecting unit is less than one magnification, and may display the image of the subject in the second display mode in a case where the display magnification is one magnification.

In this way, in an application such as online shopping using a small-sized display, it is therefore possible to realize a display of contrasting characteristics such as, for example, a) recognizing the entire image of the subject when viewing from afar, and b) equating the surface of the subject with the display screen and viewing the surface texture as if being held directly in the viewer's hand, when the viewer observes at close range.

In addition, in the first display mode, the display switching controlling unit may select an image of a part of the subject based on the display magnification and the viewing direction, and may display the selected image.

In this way, even in the case where the size of the image display area on such as a portable display is small, selecting a part of the subject is easy.

In addition, the part of the subject is one of predetermined areas, and in the first display mode, the display switching controlling unit may select an image in the area out of the plurality of areas based on the viewing direction and the display magnification, and may display the selected image.

In this way, it is possible to reduce the amount of the database for storing a part of the subject.

In addition, the image display device further may include a marker generating unit to display a first marker indicating one of the predetermined areas in the first display mode, and to display a second marker based on the viewing direction and the display magnification, and the display switching controlling unit may select one area out of the plurality of areas depending on a positional relation between the first marker and the second marker.

In this way, it is possible for the viewer to easily confirm the area which can be magnified, and to make the second marker move.

In addition, the display switching controlling unit may display, in the second display mode, a computer graphics image, the computer graphics image is generated by rendering an optical model which describes one of reflection, scattering and transmission of light on the surface of the subject, and the rendering is executed under a fixed lighting to a surface of one of an arbitrary plane and a curved surface.

In this way, in the case where the viewer sees the subject, it is possible to see with high reality like holding by hand directly.

In addition, the image display system according to the present invention is a system according to claim 15.

Further, the present invention can be embodied not only as an image display device and an image display method including as steps for the distinctive characteristics included by the image display device, but also as a program for directing a computer to execute these steps. It is needless to say that the program can be distributed via a storage medium such as CD-ROM and so on or a transmission medium such as the Internet.

According to the image display device of the present invention, in a case where inputted images of the subject product is displayed on the small-sized display such as a mobile display, the distance between the display and the viewer, in other words, the viewing distance is obtained by a sensor so as to view from the actual image to the surface fine structure of the subject continuously depending on the distance.

The generating method for the image displayed here is different based on the viewing distance from apart from the subject to close to the subject. In the area where the viewing distance is apart from the subject, the actual image is zoomed out. On the other hand in the area where the viewing distance is close to the subject, the image is switched to a detailed texture image of the subject of which the actual sample is being measured beforehand or a computer graphics image rendered on an arbitrary surface. In the case where the viewing distance is apart from the subject, it is in a state that the subject is viewed using the display frame as a window, on the other hand, in the case where the viewing distance is close to the subject, the display surface is regarded as the subject surface.

In other words, the user is able to comprehend the entire subject viewing the display as a window, and also the user is able to view the subject with high reality like touching it by drawing the subject closer, thereby practicability of online shopping is improved significantly.

## Brief Description of Drawings

FIG. 1 is a drawing to show a conventional image display device.

FIG. 2 is a block diagram showing a configuration of the image display device of a first embodiment.

FIG. 3A is a drawing showing a relation between a viewing distance and a virtual subject position in an approaching process state of the first embodiment, and FIG. 3B is a drawing showing a relation between a viewing distance and a virtual subject position in the closest approaching state of the first embodiment.

FIG. 4 is a drawing showing indications of an approaching marker under the approaching process state of the first embodiment.

FIG. 5A is a drawing showing a display of a target marker of the first embodiment, FIG. 5B is a drawing showing a display of the target marker and the approaching marker, FIG. 5C is a drawing showing a display of a reaction area for the target marker and the approaching marker, FIG. 5D is a drawing showing a display of a magnified image of the first embodiment, and FIG. 5E is a drawing showing a display of the magnified image of the first embodiment.

FIG. 6 is a drawing showing a display of the closest approaching state of the first embodiment.

FIG. 7 is a flowchart showing a process of an image display method of the first embodiment.

FIG. 8 is a drawing showing a configuration of an imaging unit of the first embodiment.

FIG. 9 is a drawing showing a tilt image database of the first embodiment.

FIG. 10 is a drawing showing a relation between a viewing distance and a display magnification.

FIG. 11 is a block diagram showing a configuration of an image display device of a second embodiment.

FIG. 12A is a diagram showing a lighting detection in the closest approaching state of the second embodiment, FIG. 12B and FIG. 12C are diagrams showing generation process of the closest approaching image of the second embodiment.

FIG. 13 is a drawing showing a configuration of an imaging unit of the second embodiment.

FIG. 14 is a flowchart showing a process of an image display method of the second embodiment.

FIG. 15 is a block diagram showing a configuration of an image display device of a third embodiment.

FIG. 16 is a drawing showing a state of distance detection in the closest approaching state of the third embodiment.

FIG.17 is a drawing showing a configuration of an imaging unit of the third embodiment.

FIG. 18 is a flowchart showing a process of an image display method of the third embodiment.

## Best Mode for Carrying Out the Invention

Hereinafter embodiments of the present invention will be described using drawings.

(First embodiment)

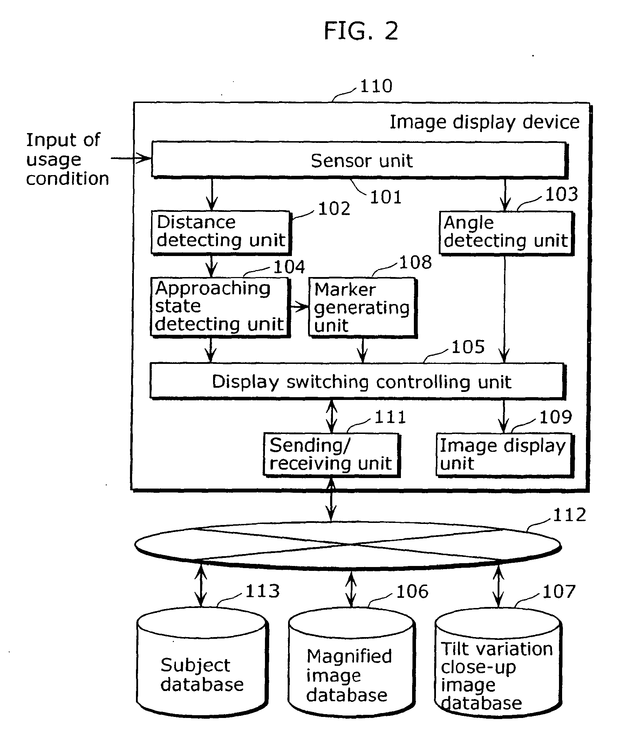

FIG. 2 is a block diagram showing a configuration of the image display device of a first embodiment of the present invention. An object of the present invention is that when a viewer performs online shopping using a mobile display device, the viewer is able to view a product image with high reality. The viewing with high reality here means a condition that the viewer sees like touching the actual product for examining it and performs precise viewing of a partial local area of the product sequentially and unconsciously, not merely seeing the entire product.

An image display device 110 is a mobile display terminal and the like movable freely held by the viewer. The image display device 110 includes a sensor unit 101, a distance detecting unit 102, an angle detecting unit 103, an approaching state detecting unit 104, a display switching controlling unit 105, a marker generating unit 108, an image display unit 109 and a sending/receiving unit 111 as shown in FIG. 2. Besides the image display device 110 is connected to a subject database 113, a magnified image database 106 and a tilt variation close-up image database 107 via a network 112.

Here the image display unit 109 is a unit such as liquid crystal display panel for showing images. The sensor unit 101 is a compound sensor system being comprised of an optical image system such as a camera, an ultrasonic wave sensor, an acceleration sensor or the combination of these sensors in order to detect a usage state of the image display device 110. The distance detecting unit 102 detects a distance between an outputting signal from the sensor unit 101 and the viewer. The angle detecting unit 103 detects the angle of the outputting signal from the sensor unit 101 relative to the position of display held by the viewer by placing the viewer as a reference point.

Further the approaching state detecting unit 104 detects a state how the viewer is approaching the image display unit 109. The display switching controlling unit 105 displays an image processed properly depending on the result of the approaching state detecting unit 104 on the image display unit 109. The marker generating unit 108 generates a marker image to display an approaching position on the image for the viewer.

Further the subject database 113 stores the data of the entire image of the product beforehand. The magnified image database 106 stores the data of image beforehand in order to generate a continuous magnified images focusing on a particular part of the product image (image of a part of a product). The tilt variation close-up image database 107 stores the data of the image beforehand in order to generate an image to view by giving a tilt to the approached detailed image. The sending/receiving unit 111 performs sending and receiving the necessary image data to and from the magnified image database 106 and the tilt variation close-up image database 107. The network 112 connects the image display device 110, the magnified image database 106 and the tilt variation close-up image database 107.

Here a signal outputted from the sensor unit 101 is processed at the distance detecting unit 102 and the angle detecting unit 103. Further, the distance between the image display device 110 and the viewer, and the angle at the position of the image display device 110 held by the viewer as opposed to the angle of the viewer as a reference point are detected. It should be noted that regarding the methods to detect the distance and the angle using the optical image system such as camera, the details are described in the above-mentioned reference, *"Display system possible to perform view control by user's view"*, the description is therefore not included here.

The display switching controlling unit 105, for product image to be changed and the processing, generates an image by interpolating sequentially with actual time, using discrete images stored beforehand in order to display from the entire image to the detailed image of the product as mentioned hereinafter.

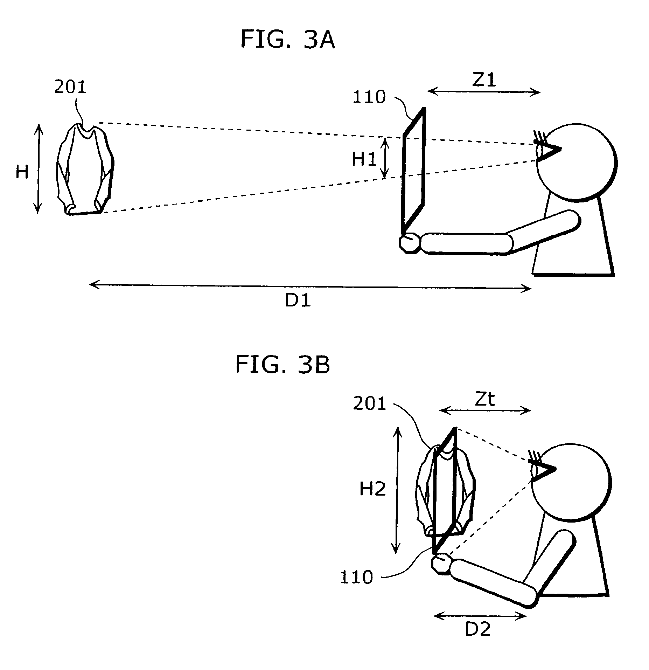

The marker image is composed properly and displayed on the image display unit 109 configuring the mobile display. The function of the approaching state detecting unit 104 is described. In FIG. 3, a virtual subject 201 is a subject placed in a distance virtually apart from the viewer, the image display device 110 is for displaying a subject.

The distances between the virtual subject 201 and the viewer are represented by D1 and D2, and the distances between the image display device 110 and the viewer are represented by Z1 and Zt, and the actual size in vertical direction of the virtual subject 201 is represented by H, the display size at viewing distance Z1 is H1 and the display size at viewing distance Zt is represented by H2.

FIG. 3A shows a case where the subject distance D1 is further than the viewing distance Z1, while FIG. 3B shows a case where the subject distance D2 and the viewing distance Zt are the identical. As shown in FIG. 3A, the state, where the distance to the subject D1 is comparatively larger than the viewing distance Z1, is called as in an approaching process state. This state corresponds to a performance of reviewing the image from the entire image to the detail part. This state is represented as viewing the subject apart using the image display unit 110 as a window, and it makes it possible to view covering the entire product in a small display area on the image display device 110.

Here FIG. 3B shows a state that the virtual subject 201 is being drawn closer to the image display device 110 like the viewing distance Z1 approaches closer. It should be noted that the amount of variation of the subject distance D is obtained by multiplying the amount of variation of the viewing distance Z by a constant which is determined arbitrarily, so that it is possible to display from the entire image of the subject to a part of the subject on the image display device 110. Regarding the constant number, which is multiplied by the amount of variation of the viewing distance Z, it can be calculated by using the actual size in vertical direction H of the virtual subject.

In this process, the image of the virtual subject 201 is magnified gradually and the display magnification is increased. When viewing distance reaches Zt, the position is the closest position to the virtual subject 201, and it is called in the closest approaching state. The subject distance is represented as D2 this time. When Zt is equal to D2, the positions of the product surface and display surface are the identical, and the actual size of the product is displayed in magnification of 1:1. This time, even though only the part of the subject can be displayed on the mobile display, it is possible to establish a state that is close to a state providing shininess, texture, graininess and so on like touching and viewing the product. The display magnification m is a ratio between the viewing distance and the subject distance, and can be represented in (equation 1). Table 1 shows relations for the display magnification, the viewing distance, and the display size on the display in each approaching process state and the closest approaching state.

$$m = Z1 / D1 = H1 / H \qquad\qquad (equation\ 1)$$

Table 1

|  | Approaching process state | Closest approaching state |
|---|---|---|
| Viewing distance Z | Z1 | Zt |
| Subject distance D | D1 | D2 = Zt |
| Display magnification m | (Z1 / D1) | 1 |
| Size on display | (Z1 / D1)H | H |

Assuming that the subject is H = 1 (m), D1 = 10 (m), Z1 = 40 (cm) and Zt = 20 (cm). In the case where the image display device 110 is drawn toward the virtual subject from 40 (cm) to 20 (cm) in viewing distance, the subject distance D1 is shifted to the subject distance D2, actually 10 (m) to 20 (cm), and the display magnification is increased from 4(%) to 100 (%), the display size on the image display device 110 is shifted from 4 (cm), which is close to the vertical size, to 1 (m), which is exceeding over the size of the image display device 110. As a result only 4 (%) of a part of the subject, that is 4 (cm) out of 1 (m) in vertical direction of the subject, is displayed on the image display device 110.

The operation of the approaching state detecting unit 104 is, for display magnification m, to judge that when m<1 (m is smaller than one), it is in an approaching process state, while when m=1 (m is equal to one), it is in the closest approaching state. This judgment can be executed using the relation of the viewing distance Z, the virtual subject distance D and the size on the display in table 1. Here the particular value of Zt, assumed to be 20 (cm) in the above, is determined tentatively. Since it is not convenient for adjustment function of human's eye if the viewer views the viewing image display device 110 too closely, the display pixel structure on the image display device 110 is unexpectedly viewed. The distance is, therefore, desirable to be a distinct vision of an ordinary distance for seeing display.

Further it is assumed in the embodiment as D2 = Zt, that means the subject is located at the same distance with the viewing distance in the closest approaching state. The relation between the subject and the viewing distance can be determined empirically by way of subjective evaluation test in view of human interface, and basically discretional. Accordingly the judgment for the approaching process state and the closest approaching state can use either display magnification, size on display or viewing distance not limited to table 1, and the threshold is also arbitrary.

In the present invention, the method of how to use the result of distance detection and angle detection which are outputted from the sensor and the control method for display image are different depending on in the approaching process state (a first display mode) and in the closest approaching state (a second display mode).

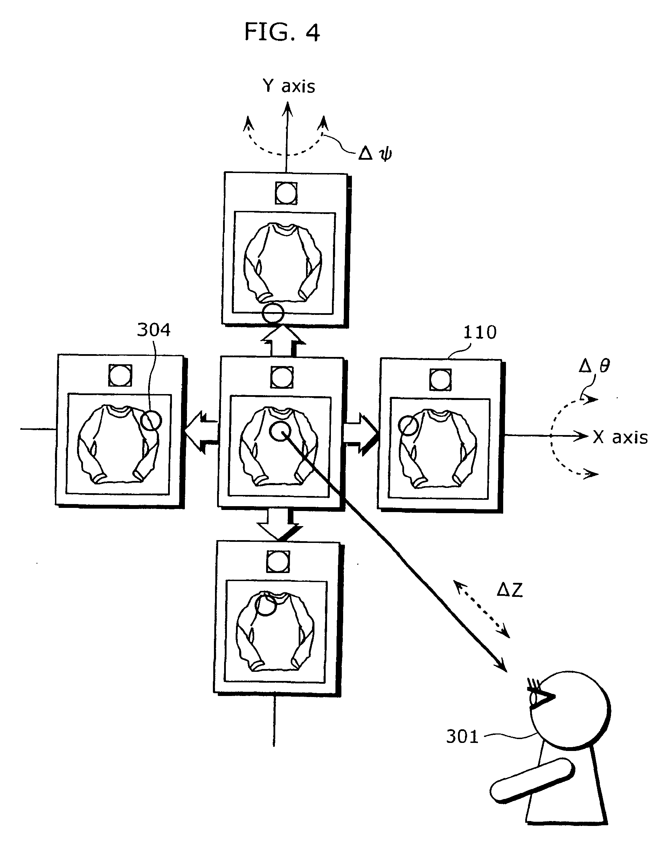

Now in a case where the state is in an approaching process state, the operation of the image display device 110 is described using FIG. 4. FIG. 4 shows a state that the viewer is displaying a sweater of a product image on a screen and viewing a display. The coordinate axes XYZ are fixed considering the viewer's head as the origin in the figure.

First, the viewer views the entire image of the product. If the viewer wants to view the surface of a sweater in detail, the viewer holds the image display device 110 and makes the device 110 approach the sweater targeting the part of the product image. In this state, the angle detecting unit 103 detects the movement as a distance $\Delta Z$ on Z axis, a rotation angle pitch $\Delta\theta$ around X axis and a rotation angle yaw $\Delta\psi$ around Y axis. In this state when the angle is slight, the equations below are true, and $\Delta X$ and $\Delta Y$ can be calculated. Other than these, the displacement $\Delta Y$ on Y axis direction and the displacement $\Delta X$ in X axis direction can be detected directly. Hereinafter the amounts of movement of the image display device 110 in an approaching process state are represented as $\Delta X$ and $\Delta Y$.

$$\Delta X \fallingdotseq Z \, \Delta \psi$$
$$\Delta Y \fallingdotseq Z \, \Delta \theta \qquad\qquad \dots \text{(equation 2)}$$

As a result of the detection $\Delta X$ and $\Delta Y$ as equation (2), an approaching marker 304 indicating an approaching position desired by the viewer on the image in the display switching controlling unit 105 moves up/down/left/right, and then composed and displayed on the product image. The relation between the moving direction of the approaching marker 304 and the direction of $\Delta X$ and $\Delta Y$ are not specified, and the moving direction of the approaching marker 304 is assumed to move toward counter direction to the direction of $\Delta X$ and $\Delta Y$ and the subject is displayed in this embodiment. For example, in a case where the viewer moves the image display device 110 by holding it towards left side direction, and the approaching position is shifted to slightly right side from the center, so that the approaching marker 304 is shifted to right direction from the previous position on image.

The viewer makes the image display device 110 move along Z axis by holding the device 110 as above, concurrently with adjusting by seeing the approaching marker 304, and the displacement $\Delta Z$ of the movement is detected by the distance detecting unit 102.

Subsequently, the display switching controlling unit 105 displays magnified image of the product image by placing the above-mentioned approaching area as a center according to the moved distance of $\Delta Z$ in Z axis direction. The display magnification can be set up as a ratio of Z1 and D1 as shown in table 1.

As shown in the above-mentioned embodiment, the above angle is not detected by detecting the line of sight of the viewer, the viewer is not able to move the line of sight freely on the display because the size of the display is small in the image display device 110, so that the line of sight is always fixed on a straight line connecting the viewer's eye and the mobile image display device 110. However as shown in FIG. 4, in a case where the viewer approaches somewhere shifted towards either up/down/left/right from the center of the product image, as an alternative way of sight detecting, a position detecting of the mobile image display device 110 is executed placing the viewer as the origin.

Accordingly in a case where the viewer moves in XY-dimensional area holding the image display device 110 without changing Z value, the image itself on the display is not shifted, but only the position of the approaching marker 304 is shifted in the approaching process state of the embodiment.

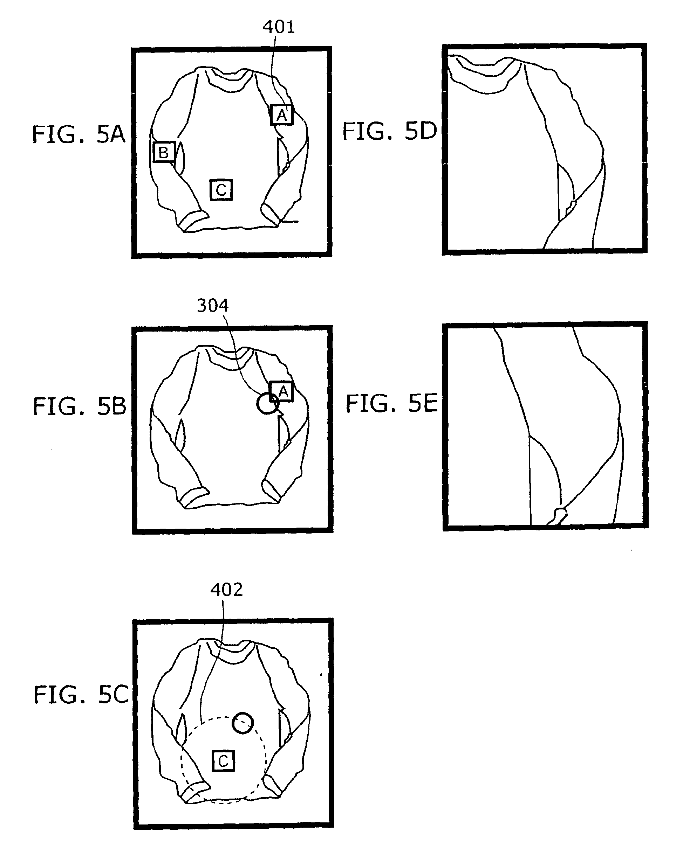

Next an image displayed in the approaching process state described in FIG. 4 is described using FIG. 5. In the case where the display size of the mobile image display device 110 is small, it can be imagined that it is very difficult to specify the accurate approaching position. In the present embodiment, an approachable area is set up beforehand. Further in a case where the viewer moves the image display device 110 to XY axes direction, the approachable area is shown as a target marker 401. Here the image display device 110 is moved until the position matching to the approaching marker 304, so that the target marker 401 is selected. FIG. 5A shows the image display device 110 presenting the target marker 401, FIG. 5B shows the image display device 110 where an arbitral target marker 401 is selected by the approaching marker 304, FIG. 5C shows the image display device 110 selecting the target marker 401 by making the approaching marker 304 move in a predetermined area of the target marker 401, FIG. 5D shows the image display device 110 indicating magnified image of an approachable area selected by the approaching marker 304 and FIG. 5E shows the image display device 110 with selected approachable area being further magnified.

At first, three of (A), (B) and (C) are fixed as approachable areas in FIG. 5A, and then the target marker 401 indicating approachable position on the entire image of the product image is shown.

As a next step, the viewer holds the image display device 110 and moves to show the approaching marker 304 as shown in FIG. 5B by moving the image display device 110 in XY axes directions, so that the target marker 304 which being an unspecified approaching target of product image is specified. There are different substantial styles as set-up methods for local area as a target to be approached, specifically when the display is relatively a large-sized display, it is preferable to set up flexibly since product image is presented in comparatively large area.

Different types of viewer interface are foreseeable for this section. For example, the target marker 401 is not shown on the product image at the beginning. When the approaching marker 304 is appeared by moving the image display device 110, the target marker 401 nearest to the approaching marker 304 may be displayed at first.

Alternatively as shown in FIG. 5C, when the approaching marker 304 moves into the approaching marker reacting area 402 within a specified distance area from the target marker 401, this may be judged as approaching the corresponding target marker 401 automatically. Besides once the position to be approached is specified, the approaching marker 304 or the target marker 401 may be deleted not to obstruct image viewing.

Next in the approaching process state, the approaching area is selected for still image, while the viewing distance approaches the corresponding area, and then the magnified image stored in the magnified image database 106 is displayed as shown in FIG. 5D. Further when the viewer moves the image display device 110 in Z axis direction, the magnified image, being magnified in Z axis direction as if approaching gradually and serially centering on a specified part in product image, is displayed sequentially as shown in FIG. 5E.

The magnified image database 106 stores sequential magnified images for the respective approachable areas (A), (B) and (C) beforehand, so that the magnified images can be displayed, or the high-resolution image is processed, so that sequential magnification can be realized. In any case, since the area requiring high resolution image is limited to the approachable area, the amount of accumulated image is comparatively smaller than the accumulated high resolution image of the entire subject advantageously. Besides in this process, the images can be obtained using a device mentioned hereinafter.

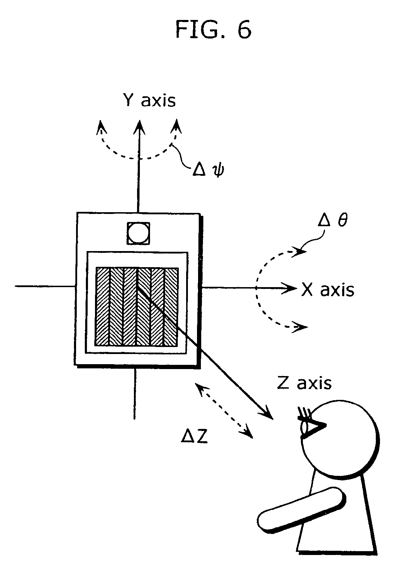

Next the closest approaching state is described using FIG. 6.

Taking a sweater as an example for product image, the closest approaching state means that the viewer approaches a particular part on the sweater closely enough to examine such as surface pattern, weaving, textile quality and texture, when the viewer sees the actual product. In this case, the display switching controlling unit 105 displays an image by a different operation from an approaching process state.

First, in the closest approaching state, a specified area of product image is displayed on the entire area of the display unit 109, and the knitting stitches of sweater is shown in this example. Here when the viewer holds the image display device 110 and tilts the device 110 like the way mentioned-above, the angle detecting unit 103 detects the tilt of the image display device 110 as a distance $\Delta Z$ on Z axis, a rotation angle pitch $\Delta\theta$ around X axis and rotation angle yaw $\Delta\psi$ around Y axis.

In the closest approaching state, the distance $\Delta Z$ on Z axis direction is subject to be used only at a time of returning to the approaching process state again, in a case where the subject distance D is greater than the viewing distance Zt. In fact the two angles of $\Delta\theta$ and $\Delta\psi$ are chiefly detected, and an image in a state that the tilt of the subject surface being varied for the viewer under fixed lighting and fixed eyesight is displayed, the actual texture, graininess and so on of the surface can be shown with high reality.

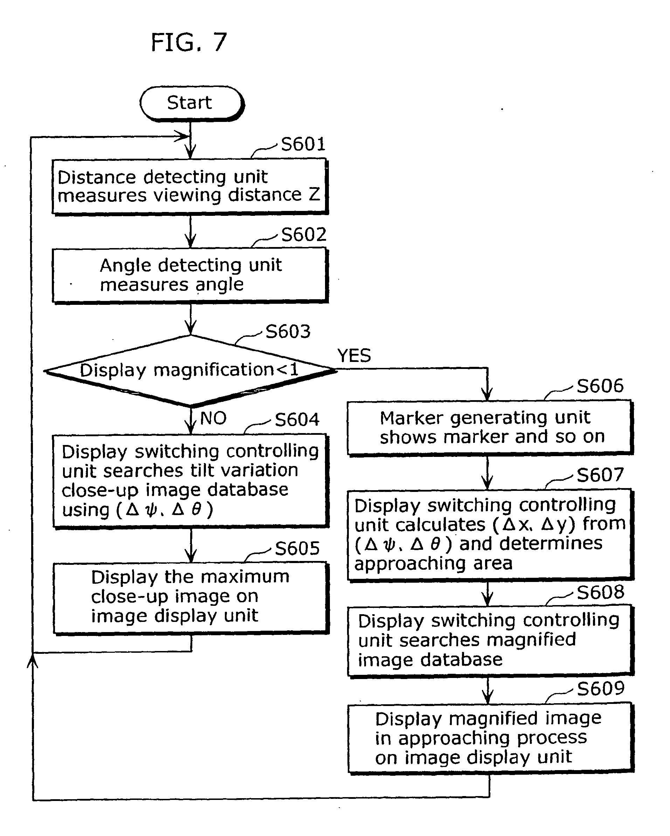

And now the method of image display in the closest approaching state as mentioned-above is described using the flowchart in FIG. 7. The first distance detecting unit 102 measures a viewing distance Z at S601, and then the angle detecting unit 103 measures $(\Delta\psi, \Delta\theta)$ at S602.

Subsequently, the approaching state detecting unit calculates a display magnification at S603, and then judges the viewing state. Now it is obvious from the (table 1) that this detection may be performed by viewing distance other than the value of the display magnification. Here in the case where the state is detected as the approaching process state, proceeding to S606, and in the case where the state is detected as the closest approaching state, proceeding to S604.

First, in the approaching process state, the marker generating unit 108 shows the approaching marker 304 and the target marker 401 on the image, and then the display switching controlling unit 105 executes selection of approaching area from $(\Delta\psi, \Delta\theta)$ to $(\Delta X, \Delta Y)$ at S607.

Subsequently, the display switching controlling unit 105 searches the magnified image database 106 at S608, and outputs sequentially the corresponding magnified image to the image display unit 109 as the image of approaching area to be targeted. And then the image display unit 109 displays the magnified image superimposing on the product image.

Next in the closest approaching state, at S604, the display switching controlling unit 105 calculates the variation of tilt based on angles $(\Delta\psi, \Delta\theta)$, searches the tilt variation close-up image database 107, and reproduces the variation of tilt for close-up image.

Next the image display unit 109 displays the searched close-up image on the image display unit 109. Here the variation of the viewing distance Z does not change the close-up image, and when the viewing distance Z is increased, the state returns to approaching process again. Accordingly in a system where the state is changed based on the viewing distance Z, there is a possibility that the state may be fluctuated wildly by noise from a sensor system. In that case, it is effective to take methods giving a sort of hysteresis characteristic and smoothing characteristic to the system.

Hereinbefore, the image display method and the image display device 110 of the first embodiment are described.

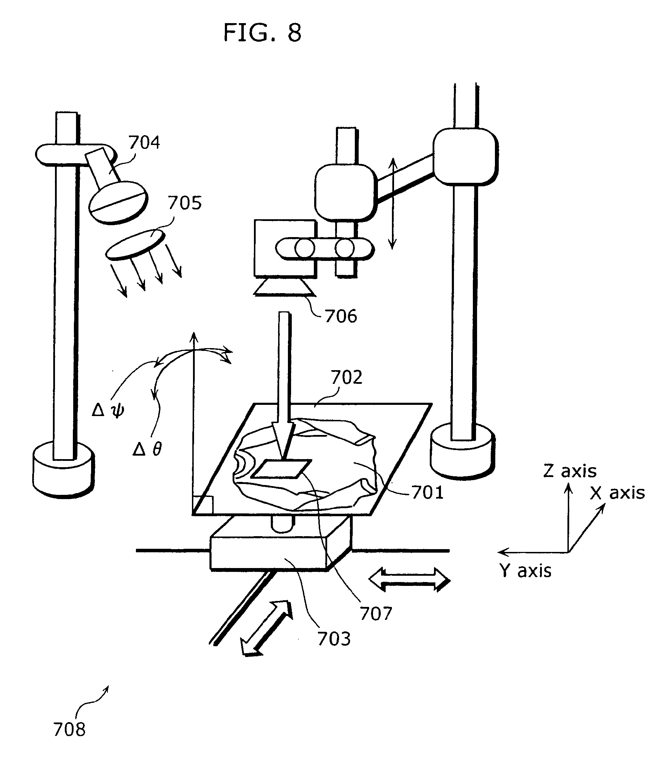

Now the utilized image database obtaining method is described. FIG. 8 shows an imaging unit taking certain specified area on a knitted sweater as a subject 701 under fixed lighting and fixed camera angle by tilting the subject 701 to different angles.

The tilting stage 702 is a stage to place a sweater as the subject 701, and the tilt is varied. The automatic swivel device 703 has a structure to tilt the tilting stage 702 in two degrees of freedom $\Delta\psi$ and $\Delta\theta$ in normal direction of a face, and a structure to move the tilting stage 702 in parallel to XY axes direction. The lighting lamp 704 gives light to the subject 701 under angle of incidence about 22 degrees through the lens 705 creating parallel light.

The camera 706 is set up at a position within a range from afar to close in distance in Z axis direction, which is in vertical direction to XY axes dimension, and taking the subject 701.

In FIG. 8, although the magnified image of the subject 701 is prepared by moving the camera 706 in Z axis direction, it is possible to be easily replaced by zooming function of lens of the camera 706.

First, a procedure for preparing an image database of the magnified images of the subject 701 is described.

Here in the approaching process state, it is necessary to create the magnified images which provide sense like approaching serially and gradually to the corresponding part by selecting approaching area to still images.

First, the specified area 711 corresponding to the approachable areas (A), (B) and (C) on the subject 701 are determined, the automatic swivel device 703 is moved in parallel and then the camera 706 is set up to be located on directly above of approachable area.

Next, the camera 708 takes a series of images in the state of approaching the subject by moving to Z axis direction and the images taken are stored in the magnified image database 106.

As mentioned above, a magnified image of approachable area in a state of approaching process can be created.

Next a procedure for preparing an image database of the tilt variation close-up image of the subject 701 is described.

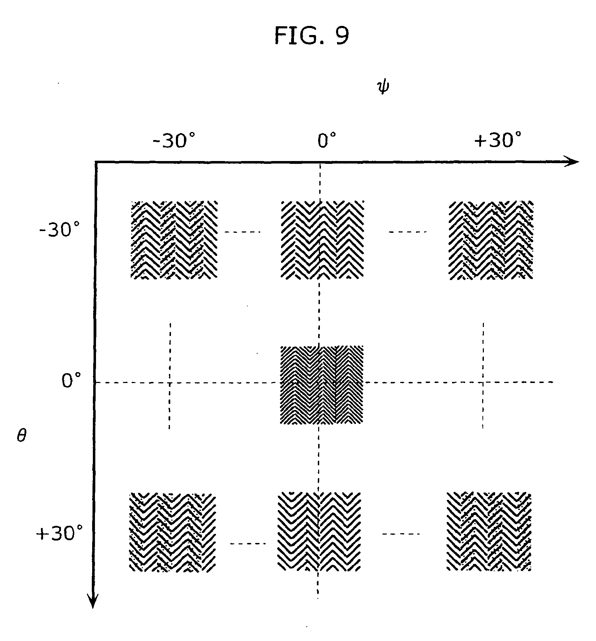

In the closest approaching state, as shown in FIG. 6, images depending on rotation angles for both around X axis and Y axis of the image display device 110 are necessary. The tilting stage 702 tilts to two variable degrees of $\Delta\psi$ and $\Delta\theta$ and the subject image is taken again, and then the images are stored in the tilt variation close-up image database 107 as two-dimensional image database as shown in FIG. 9. It should be noted that the above-mentioned tilt angle range is $\pm$ 30 degrees in FIG. 9, but other values can be used.

Further, the display switching controlling unit 105 creates an actual display image out of two kinds of image database above. In the approaching process state, the magnified image database 106 is searched, if necessary, and a magnified image with interpolating is displayed, while in the closest approaching state, the tilt variation close-up image database 107 is searched referring to $\Delta\theta$ and $\Delta\psi$, and the tilt variation close-up image is interpolated properly when necessary, and displayed.

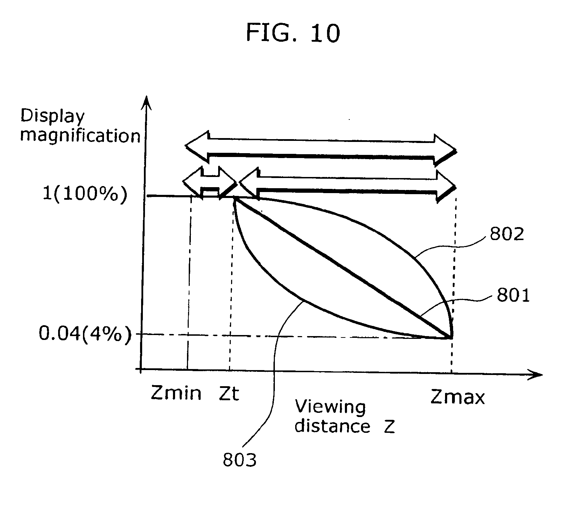

It should be noted that the relation between the viewing distance and the display magnification in the approaching process state, for example like a direct line 801 shown in FIG. 10, the display magnification may be increased equally based on the viewing distance (Zmax to Zt), while the display magnification may be increased based on the viewing distance by deviating like curves 802 and 803. The viewing distances from Zt to Zmin are the closest approaching state in FIG. 10.

Besides, as for the viewing distance Zmax, the viewing distance Zmin, the viewing distance Zt as the closest approaching state, the values set up beforehand are used, and also the viewer is able to set up as an initial set up. For example the viewing distance Zmax can be set up at a state where the viewer extends his/her arm to the maximum extent holding the image display device 110, the viewing distance Zmin can be set up at the closest position to the image display device 110 where the viewer is able to confirm the image, and the viewing distance Zt can be set up at the position where the viewer desires as the closest approaching state.

(Second embodiment)

In the first embodiment, the image display device 110 using images taken under fixed lighting for taking images as the closest approaching image corresponding to variations in two degrees of freedom for the tilts of normal of the subject surface is described. In the second embodiment, it is described about a case that the viewer uses this image display device inside and outside of building. The structure to display by compounding the closest approaching image which would be viewed under the current lighting, in a case of viewing the closest approaching image is also described.

As a method to describe surface characteristic under a general lighting, in the recent computer graphics field, the conceptions such as the bidirectional reflectance distribution function (BRDF) and the bidirectional texture function (BTF) which is expanded BRDF to two-dimensional image are often used. The BRDF is a function with four variables of $(\alpha, \beta)$ being expressed the angle of incidence of lighting to only one point on the surface on a spherical coordinate, and $(\theta e, \varphi e)$ being expressed the view angle on a spherical coordinate, and the function is defined that radiance L is normalized by illuminant E like (equation 3).

$$BRDF(\alpha、\beta, \theta e、\varphi e) = L(\theta e、\varphi e) / E(\alpha、\beta) \quad ...(equation 3)$$

BTF is also being expanded BRDF to an image area having an arbitrary area, and is a function with six variables $(\alpha, \beta, \theta e, \varphi e)$ and $(X, Y)$ in total, BTF may be called as three-dimensional texture to conventional texture. In a case where the illuminant is a constant in the predetermined area, BTF is obtained by normalizing with illuminant from a certain angle of luminance image from view angle direction like (equation 4).

$$BTF(\alpha, \beta, \theta e, \varphi e, X、Y) = L(\theta e, \varphi e, X, Y) / E(\alpha, \beta) ... (equation 4)$$

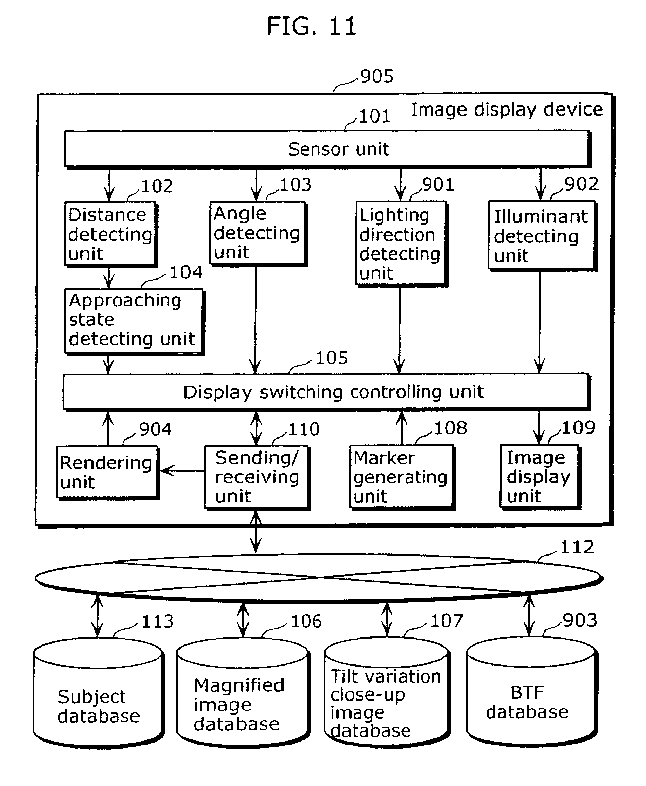

In the second embodiment, it is an object to perform display in rich reality further using BTF. FIG. 11 is a block diagram to show the configuration of image display device of the second embodiment. The different points from FIG. 2 are a lighting direction detecting unit 901, a lighting detecting unit 902, a BTF database 903 and a rendering unit 904. It should be noted that since functions of the components with the same numbers in FIG. 2 are the same as the first embodiment, the descriptions are not included.

The image display device 905 is such as a mobile display terminal which being held by a viewer and movable freely, and the device 905 includes the lighting direction detecting unit 901, the lighting detecting unit 902, the rendering unit 904, the sensor unit 101, the distance detecting unit 102, the angle detecting unit 103, the approaching status detecting unit 104, the display switching controlling unit 105, the marker generating unit 108, the image display unit 109 and the sending/receiving unit 111. The image display device 905 is connected to the subject database 113, the BTF database 903, the magnified image database 106 and the tilt variation close-up image database 107 via the network 112.

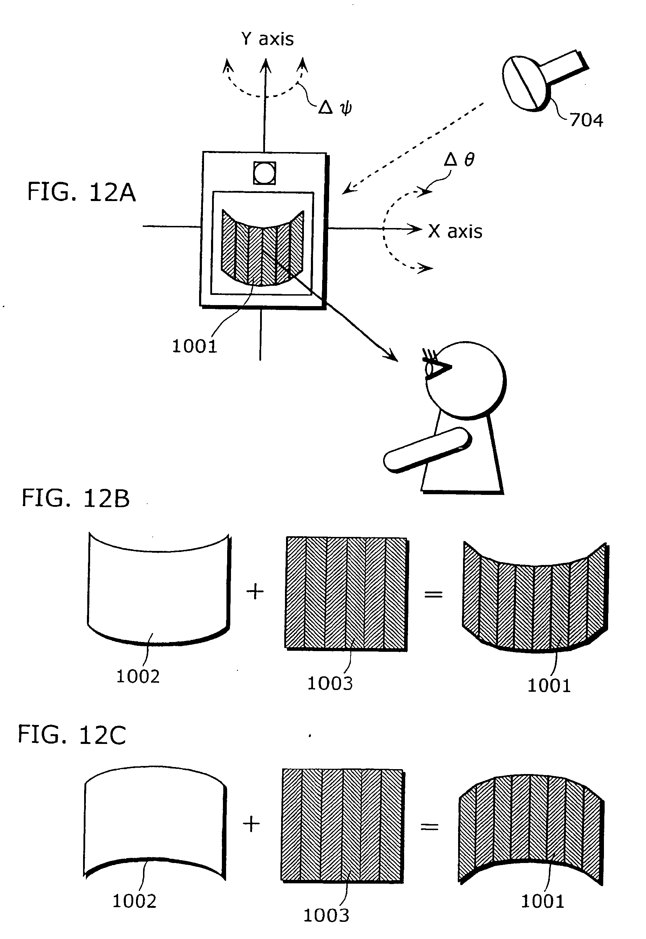

FIG. 12A shows a lighting direction detection and an image to be displayed after rendering. The lighting direction detecting unit 901 is for detecting direction of an ambient lighting ($\alpha$, $\beta$) and an illuminant E when the viewer uses the image display device 905 outside and inside of building as shown in FIG. 12. The lighting detecting unit 902 is for detecting display face illuminant under ambient lighting in the case where the image display device 905 is used inside and outside of building. The detecting of these illumination lighting is possibly used by processing signal from the sensor unit 101 of the first embodiment, or is possibly executed by utilizing additional illuminant sensor and so on. In the BTF database 903, BTF which has been obtained by the result of measurement of a specified area of the subject beforehand is stored. The rendering unit generates a luminance of the closest approaching image of the subject, which would be viewed under a viewing lighting, and the luminance is represented by a product of BTF and illuminant of lighting as (equation 5).

$$L\ (\theta e,\ \varphi e,\ X,\ Y) = BTF\ (\alpha,\ \beta,\ \theta e,\ \varphi e,\ X,\ Y)\ x\ E(\alpha 、\ \beta)\dots\ (equation\ 5)$$

The rendering of computer graphics on the basis of image using the observational BTF needs a three-dimensional model of the subject or surface normal, additionally it is necessary to measure using particular equipment such as laser scanner. However the subject is an item whose form is variable like sweater in the embodiment, and BTF is applied to the closest approaching image being relatively local, so that it is not necessary to obtain the surface form of the subject.

Here in the embodiment as shown in FIG. 12B and FIG. 12C, it is assumed that the virtual curved surface 1002 being an arbitrary virtual plane and a curved surface, the closest approaching image 1001 to be shown is generated by applying the BTF 1003 as a three-dimensional texture, and is displayed on the image display device 905. Note that FIG. 12B shows a case that the virtual curved surface 1002 is convexity, while FIG. 12C shows a case that the virtual curved surface 1002 is concavity. It is also possible to configure to show that the virtual curved surface 1002 is convexity or concavity on the image display 109. Accordingly, on an arbitrary plane, especially on a curved surface, the surface texture for the variation of lighting can be discriminated clearly when BTF is applied, so that the viewer is able to virtually feel the texture like actually touching effectively. For this purpose, the virtual curved surface 1002 used for rendering may be freely designated and changed in line with the manner of touching by the viewer.

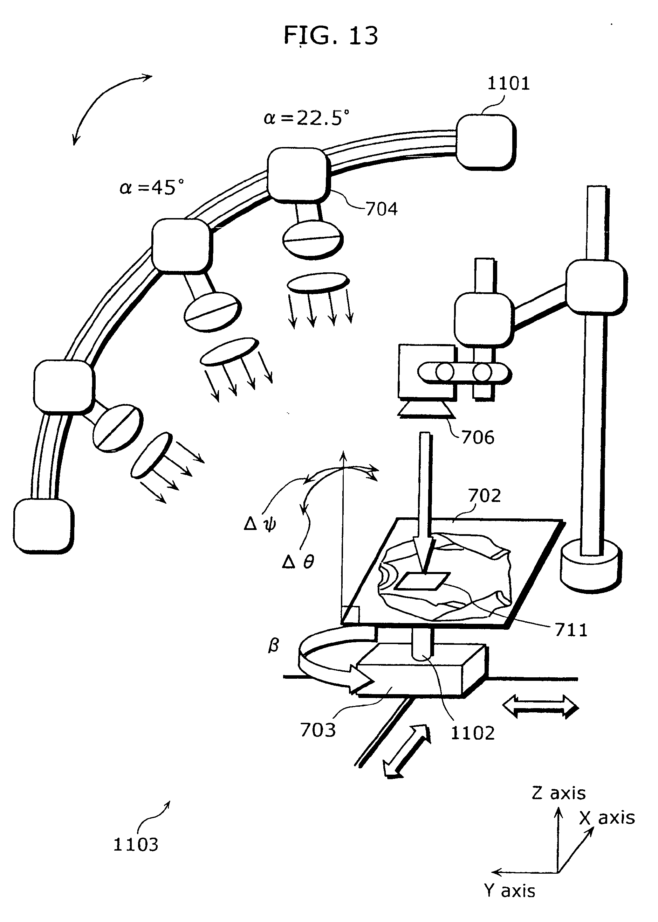

FIG. 13 shows the imaging unit 1103 for measuring BTF of the subject. The same parts as the imaging unit 712 of FIG. 8 have the same numbers, and the different points from FIG. 8 are that the lighting angle moving structure 1101 for lighting angle $\alpha$ and the subject rotation structure 1102 for angle $\beta$ to the automatic swivel device 703 being added.

The operation method of the imaging unit 1103 is described. The operation in the approaching process state is not included as it is the same as FIG. 8. Next the closest approaching state is described. In the case of BTF measurement, the pixel value viewed by the camera 706 is directly used as a luminance value, the optoelectric conversion function (OETF) of the camera 706, therefore, should be calibrated to make the function linear to luminance beforehand. In a case where the position of the camera 706 is the closest approaching state, firstly, a lighting angle $\alpha$ is fixed at an initial position of 22.5° to camera sight angle, and then the subject rotation structure 1102 is fixed to at the position of $\beta$ = 0° to XY coordinate system. Under the above-mentioned setting condition, the tilting stage 702 is tilted with two variables $\Delta\psi$ and $\Delta\theta$, and images are taken serially. Further, the lighting position is shifted to the position of 45° to camera sight, and the image is taken by tilting with two variables $\Delta\psi$ and $\Delta\theta$ again. This is repeated up to 157.5° at every 22.5°.

Next an angle $\beta$ is rotated at every predetermined angle, lighting angle $\alpha$ is rotated from 22.5° to 157.5° on the subject rotation structure 1102, and this measurement is repeated. The measurement including two degrees of freedom of lighting angle ($\alpha$,$\beta$) is completed. This result is stored as the BTF database 903.

It should be noted that although the camera 706 is fixed and the lighting angle $\alpha$ is varied in the imaging unit 1103 in FIG. 13, the lighting lamp 704 may be fixed and the camera angle can be shifted alternatively. Note that the value of angle interval 22.5° for measuring BTF is just an example, and optional values may be used. The properly interpolated values of the measurement values are mainly used in actual calculation.

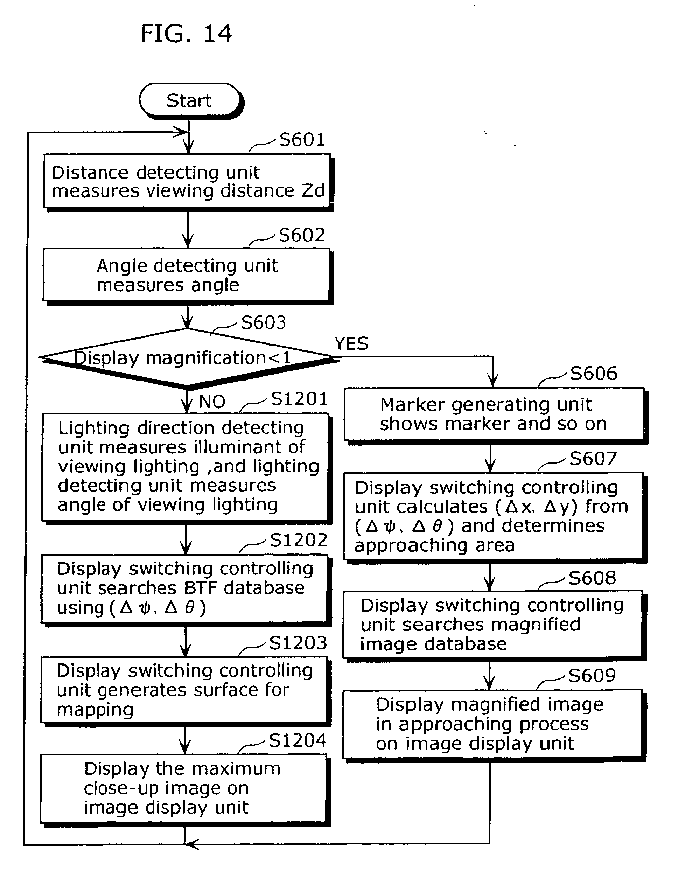

Next, a flowchart for an image display method of the second embodiment is shown in FIG. 14. The different points from FIG. 7 are S1201 to S1204. The descriptions from S601 to S603 and from S606 to S609 are, therefore, not included.

First, the lighting direction detecting unit 901 performs measurement for the angle of viewing lighting, and the lighting detecting unit 902 performs measurement for illuminant at S1201.

Second, the display switching controlling unit 105 outputs a BTF request signal at S1202 for searching a lighting angle and the BTF corresponding to illuminant to the sending/receiving unit 111, and the sending/receiving unit 111 sends the BTF request signal to the BTF database 903 via a network, and then the BTF corresponding to the BTF request signal is sent to the image display device 905 in the BTF database 903.

Next, the rendering unit 904 generates surface for mapping of the received BTF at S1203, and then the BTF is mapped considering a lighting direction and a normal of the surface, further generates an image rendered as the closest approaching image.

Next the image display 109 displays the generated closest approaching image at S1204.

Additionally, the function used for rendering is the BTF because the surface of sweater where texture being prevailing is exemplified, in a case where the surface is smooth, the same effect can be obtained even the BRDF, and the bidirectional scattering surface reflectance distribution function (BSSRDF) may be used in a case where internal scattering being prevailing such as paper surface.

(Third embodiment)

The image display device 905 in the first and the second embodiment displays only the change of image in viewing to the variations of $\Delta\psi$ and $\Delta\theta$ in the closest approaching state. On the other hand, the image display device 905 of the third embodiment to be provided is able to display a magnified image which being a detailed image by reflecting slight variations by the distance of close-up image to variation of a viewing distance by using a database considering concept of distance by extending the BTF.

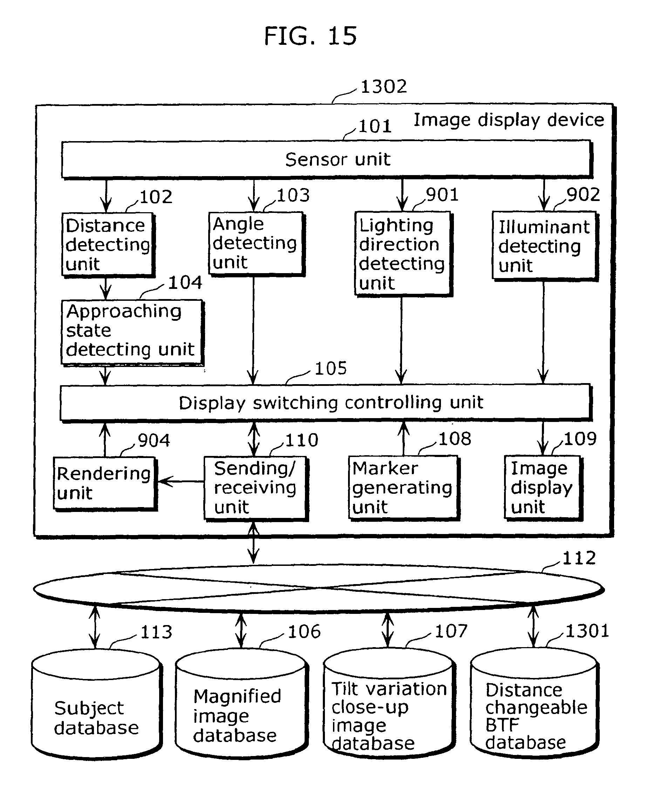

FIG. 15 is a block diagram showing the configuration of the image display device 1302 of the embodiment, the BTF database 903 is replaced by the distance variable BTF database 1301 in the image display device 1302 of FIG. 11 in this configuration. Here the distance variable BTF is called as the DTBF in the present invention. Note that regarding other component, since the functions of components with the identical number with FIG. 11 are the same as the first embodiment and the second embodiment, the descriptions are not included.

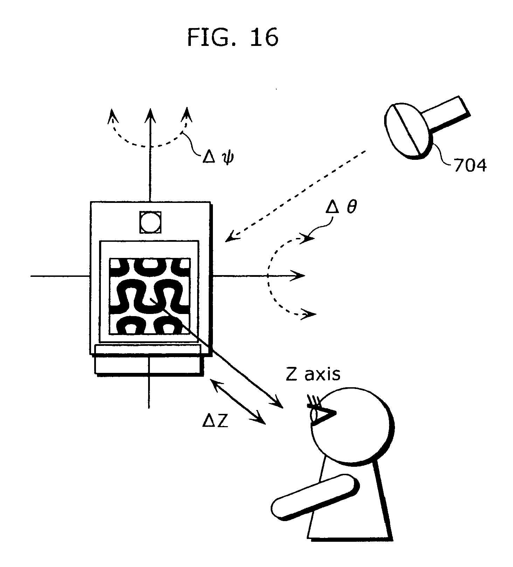

Next, FIG. 16 is a drawing to show an image display method of the embodiment. It shows that the viewing distance to display an image is closer based on the angles ($\Delta\psi$, $\Delta\theta$) and the variation $\Delta Z$ in the viewing distance Z in the closest approaching state, so that the surface structure 1401 is varied to an image to be viewed in detail. In this state, the viewing distance is Z < Zt, and the structure of weaving of sweater as the subject can be viewed in detail.

The DBTF is a seven-variation texture function to which the conventional BTF ($\alpha$, $\beta$, $\theta e$, $\varphi e$, X, Y) is extended in a distance direction Z, and is defined with the amount of normalization of luminance image from eyesight direction at the position of the viewing distance Z by illuminant of lighting as (equation 6).

$$\text{DBTF }(\alpha, \beta, \theta e, \varphi e, X, Y) = L (\theta e、\varphi e、X, Y, Z) / E (\alpha, \beta)$$

$$\text{... (equation 6)}$$

In the DBTF database 1301, the DBTF which being obtained by measurement of specified area of the subject performed by particular device beforehand is stored. The rendering unit 904 generates a luminance of detailed image of the subject which would be viewed under a viewing lighting as luminance represented by the product of the BTF and the lighting as (equation 7).

$$L(\theta e, \varphi e, X, Y, Z) = \text{DBTF }(\alpha、\beta、\theta e, \varphi e, X, Y) \times E (\alpha、\beta)$$

$$\text{... (equation 7)}$$

In the embodiment, the subject is an item whose form is variable like sweater, and when the image is a detailed comparatively local image, it is not necessary to obtain a subject form due to the DBTF. The virtual plane and the curved surface are assumed to be the virtual curved surface 1002, and the DBTF is applied to the virtual curved surface 1002, so that detailed images rendered can be generated easily and can be displayed on the image display device 1302.

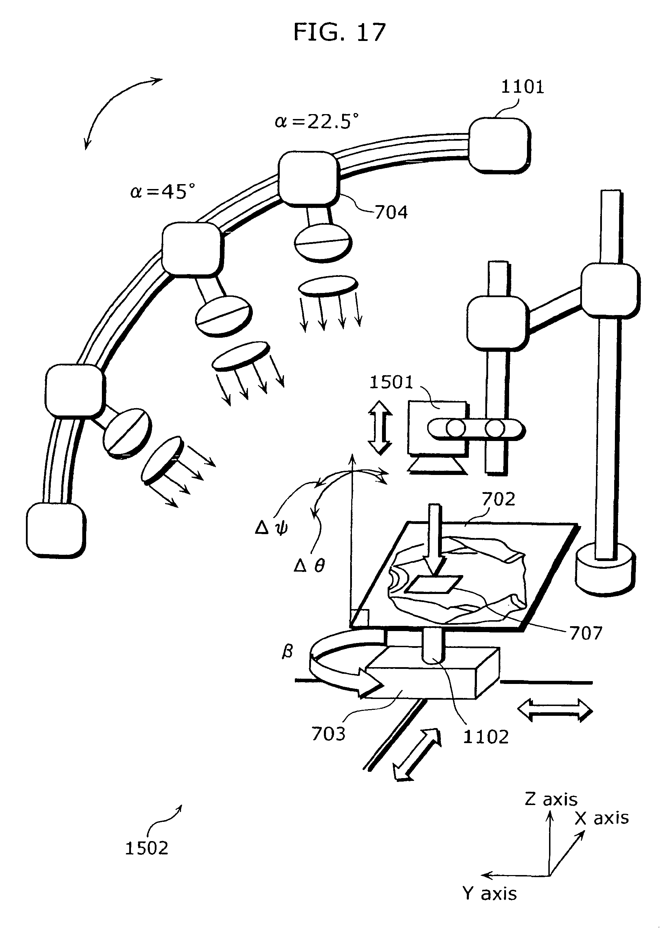

FIG. 17 shows the imaging device 1502 for measuring the DBTF of a subject, and the same parts as the imaging unit in FIG. 13 have the same numbers, as the functions are the same, and the description is not included here. Contrary to the imaging unit in FIG. 13 of the second embodiment, the camera 1501 can be moved in Z axis direction in the configuration. Note that in the imaging unit 1502, the subject distance can be varied by the moving camera 1501 in Z axis direction, alternatively the subject distance also can be easily varied by using zooming function of the camera 1501.

The operation method of the imaging unit 1502 is described. The operation in the approaching process state is not included as it is the same as FIG. 13.

Next, the DBTF measurement in a case of the closest approaching state of the third embodiment is described. First, the pixel value viewed by the camera 1501 are directly used as a luminance value, the optoelectric conversion function (OETF) of the camera 1501, therefore, should be calibrated to make the function linear to luminance beforehand.

Next, the camera 1501 is moved to a place at the closest approaching state, the lighting angle $\alpha$ is fixed at an initial position of 22.5° to camera sight angle, and then the subject rotation structure 1102 is fixed to at the position of $\beta$ = 0° to XY coordinates system. Under the above-mentioned setting condition, the tilting stage 703 is tilted with two variables $\Delta\psi$ and $\Delta\theta$, and the images are taken serially again.

Subsequently, the lighting angle $\alpha$ is shifted to the position of 45° to camera sight, and an image is taken by tilting with two variables $\Delta\psi$ and $\Delta\theta$ again. This is repeated up to 157.5° at every 22.5° of lighting angle. Next the angle $\beta$ is rotated at every predetermined angle, the lighting angle $\alpha$ is rotated from 22.5° to 157.5° on the subject rotation structure 1102 again, and this measurement is repeated. The measurement including two degrees of freedom ($\alpha$, $\beta$) of lighting angle is completed.

Next the camera 1501 is shifted closer to the subject than the position of the closest approaching state of the second embodiment, and the measurement is repeated again. Note that in the imaging unit 1502, the subject distance can be varied by moving the camera 1501 in Z axis direction, alternatively, the subject distance also can be varied by using a zooming function of the camera 1501.

The above-mentioned result is stored as the DBTF database 1301. It should be noted that in the imaging unit 1502 of FIG. 17, the camera 1501 is fixed and the lighting angle is shifted, alternatively, the light may be fixed and the camera angle may be shifted. Note that the value of angle interval 22.5° for measuring the DBTF is just an example, and optional values may be used. The properly interpolated values of the measurement values can be used in actual calculation.

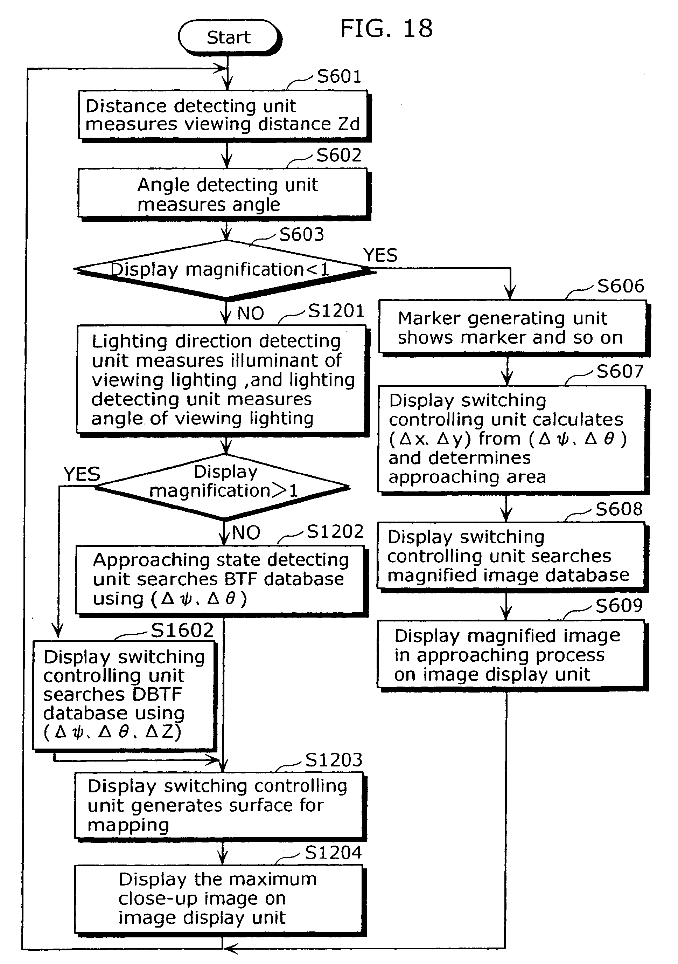

In FIG. 18, a flowchart for the image display method of the third embodiment is shown. The different points from FIG. 14 of the second embodiment are from S1601 to S1602. The description of S601 to S603, S606 to S609, S1201, S1203 and S1204 are not included in this embodiment.

First, the approaching state detecting unit 104 examines a display magnification again at S1601, in a case where the display magnification is m > 1, proceeding to S1602, and in a case where m = 1, proceeding to S1202. It should be noted that the closest approaching condition is m=1 here, alternatively the condition of the closest approaching state can be set as 0.9 < m < 1.1, which considers viewer's convenience.

Second, the display switching controlling unit 105 outputs the DBTF request signal for searching the DBTF corresponding to the lighting angle and the illuminant to the sending/receiving unit 111 at S1602, and the sending/receiving unit 111 sends the DBTF request signal to the DBTF database 1301 via a network, and sends the DBTF corresponding to the DBTF request signal to the image display device 1302 in the DBTF database.

Afterward, the display switching controlling unit 105 performs mapping for the DBTF, and generates a detailed image rendered at S1203 like FIG. 14.

Additionally, the function used for rendering is the BTF, since the surface like sweater on which texture being prevailing is exemplified. In a case where the surface is smooth, the same effect can be obtained even the BRDF, and the BSSRDF may be used in the case where internal scattering being prevailing such as paper surface.

It should be noted that in the above respective embodiments, it is described about a case that all images are obtained from the respective databases and are displayed, however the other possible case can be conceivable. For example, it is assumed that the viewer takes an image of product at a store initially. When the image of product is displayed afterwards, the actual images taken by the viewer is displayed as the entire image, and the respective images of product in the respective database can be obtained and be displayed for the other zooming-in images.

## Industrial Applicability

An image display device and an image display method of the present invention are useful, because, in the case where an inputted image of a subject product is displayed on a small-sized display such as a mobile display in an application such as online shopping, a viewer is able to comprehend the entire subject by viewing the display as a window even on a small display area of the mobile display, further the viewer is able to view the subject product with high reality as if the viewer touched the product with hand by drawing the image display device closer, so that the practicability of online shopping can be improved significantly. Moreover the image display device and the image display method can be used for medical purposes, and also for museums such as digital archives which are effective in a case of combination of actual pictures and computer graphics.

**Claims**

1. An image display device (110) for displaying an image of a subject, comprising:

   a sensor unit (101) operable to output a signal for detecting a usage state of said image display device (110);
   a distance detecting unit (102) operable to detect, as a viewing distance, a distance between a viewer and said image display device (110);
   an angle detecting unit(103) operable to detect, as a viewing direction, one of an angle of said image display device (110) relative to the viewer, and a moving direction of said image display device(110) relative to the viewer; and
   a display switching controlling unit (105) operable to switch between a first display mode and a second display mode based on the viewing distance being greater or not greater than a predetermined distance, and to display the image of the subject corresponding to one of the first display mode and the second display mode, wherein the first display mode changes a display magnification based on the viewing distance, and displays the image of the subject, and the second display mode displays images with different tilts with respect to the normal to the surface of the subject based on the viewing direction.

2. The image display device (110) according to Claim 1, further comprising
   an approaching state detecting unit (104) operable to calculate a display magnification of the image based on the viewing distance.

3. The image display device (110) according to Claim 2,
   wherein said approaching state detecting unit (104) is operable to calculate the display magnification (a) as one magnification, by assuming that the subject is located at the predetermined distance, in a case where the viewing distance is not greater than the predetermined distance, and (b) as less than one magnification, by assuming that the subject is located beyond the predetermined distance, in a case where the viewing distance is greater than the predetermined distance, and
   said display switching controlling unit (105) is operable to display the image of the subject in the first display mode in a case where the display magnification calculated by said approaching state detecting unit is less than one magnification, and to display the image of the subject in the second display mode in a case where the display magnification is one magnification.

4. The image display device (110) according to Claim 1
   wherein, in the first display mode, said display switching controlling unit (105) is operable to select an image of a part of the subject based on the display magnification and the viewing direction, and display the selected image.

5. The image display device (110) according to Claim 4,
   wherein the part of the subject is one of predetermined areas, and
   in the first display mode, said display switching controlling unit (105) is operable to select an image in the area out of the plurality of areas based on the viewing direction and the display magnification, and to display the selected image.

6. The image display device (110) according to Claim 5, further comprising
   In the first display mode, a marker generating unit (108) operable to display a first marker indicating one of the predetermined areas, and to display a second marker based on the viewing direction and the display magnification, wherein said display switching controlling unit (105) is operable to select one area out of the plurality of areas depending on a positional relation between the first marker and the second marker.

7. The image display device (110) according to Claim 6,
   wherein said marker generating unit is operable to superimpose the first marker on an entire image of the subject beforehand, and to display the superimposed image.

8. The image display device (110) according to Claim 6,
   wherein said marker generating unit is operable to superimpose the first marker on an entire image of the subject in a case where the second marker approaches the area indicated by the first marker, and to display the superimposed image.

**9.** The image display device (110) according to Claim 1,
wherein said display switching controlling unit (105) is operable to display, in the second display mode, images with differenttilts with respect to the normal to the surface of the subject based on the viewing direction and a lighting condition.

**10.** The image display device (110) according to Claim 1,
wherein said display switching controlling unit (105) is operable to display, in the second display mode, an image shown by tilting the direction of the normal to the surface of the subject in two degrees of freedom under a fixed lighting.

**11.** The image display device (110) according to Claim 1,
wherein said display switching controlling unit (105) is operable to display, in the second display mode, a computer graphics image, the computer graphics image Is generated by rendering an optical model which describes one of reflection, scattering and transmission of light on the surface of the subject, and the rendering is executed under a fixed lighting to a surface of one of an arbitrary plane and a curved surface.

**12.** The image display device (110) according to Claim 11,
wherein the optical model is a model calculated by using one of the bidirectional reflectance distribution function of the subject surface, the bidirectional surface scattering distribution function of the subject surface and the bidirectional texture function of the subject surface, and
said display switching controlling unit (105) is operable to display, in the second display mode, a computer graphics image, the computer graphics image is generated by rendering the optical model, and the rendering is executed under the fixed lighting to a surface of one of an arbitrary plane and a curved surface.

**13.** The image display device (110) according to Claim 11,
wherein the optical model is a model calculated by using one of the bidirectional reflectance distribution function of the subject surface using viewing distance as a parameter, the bidirectional surface scattering distribution function of the subject surface using viewing distance as a parameter and the bidirectional texture function of the subject surface using viewing distance as a parameter, and
said display switching controlling unit (105) is operable to display, in the second display mode, a computer graphics image, the computer graphics image is generated by rendering the optical model, and the rendering is executed under a fixed lighting to a surface of one of an arbitrary plane and a curved surface.

**14.** The image display device (110) according to Claim 1,
wherein said display switching controlling unit (105) is operable to display, In the second display mode, a magnified image of the subject based on the viewing distance.

**15.** An image display system for displaying on an image display device (110) an image of a subject stored in a server device, comprising:

an image display device (110) as defined in claim 1, and
a sending/receiving unit operable to send an image request signal to said server device based on the request, and to receive an image based on the image request signal via a network,
said server device to which the network is connected, includes:

a subject database which stores the entire image of the subject, and sends the image based on the image request signal;
a magnified image database which stores an image of a part of a subject according to a display magnification, and sends the image based on the image request signal; and
a tilt variation close-up image database which stores a tilt variation close-up image generated by tilting, to the direction of normal, the image of the part of the subject, and sends the image based on the image request signal.

**16.** The image display system according to Claim 15,
wherein said server device further includes
a BTF database which stores a bidirectional texture function for the image of the part of the subject.

**17.** The image display system according to Claim 15,
wherein said server device further includes

a distance variable BTF database which stores the bidirectional texture function for the image of the part of the subject using variation of the viewing distance as a parameter.

18. The image display system according to Claim 17
   wherein, in said server device, the bidirectional texture function for the image of the part of the subject using the variation of the viewing distance as the parameter is a function using a position on the subject for the image of the part of the subject, the viewing distance, a lighting angle and the viewing direction as parameters.

19. An image display method for displaying an image of a subject, comprising:

   a sensing step of outputting a signal for detecting a usage state of said image display device (110);
   a distance detecting step of detecting, as a viewing distance, a distance between a viewer and said image display device (110);
   an angle detecting step of detecting, as a viewing direction, one of an angle of said image display device (110) relative to the viewer, and a moving direction of said image display device (110) relative to the viewer; and
   a display switching controlling step of switching between a first display mode and a second display mode based on the viewing distance being greater or not greater than a predetermined distance, and displaying an image of the subject corresponding to one of the first display mode and the second display mode, wherein the first display mode changes a display magnification based on the viewing distance and displays the image of the subject, and the second display mode displays images with different tilts with respect to the normal to the surface of the subject based on the viewing direction,
   wherein said distance detecting step, said angle detecting step and said display switching controlling step are executed by the image display apparatus.

**Patentansprüche**

1. Bildanzeigeeinrichtung (110) zum Anzeigen eines Bildes eines Subjekts, aufweisend:

   eine Sensoreinheit (101), operabel für Ausgabe eines Signals zum Erkennen eines Anwendungsstatus der Bildanzeigeeinrichtung (110);
   eine Abstand-Erkennungseinheit (102), operabel für Erkennen, als Betrachtungsabstand, eines Abstands zwischen einem Betrachter und der Bildanzeigeeinrichtung (110);
   eine Winkelerkennungseinheit (103), operabel für Erkennen, als eine Betrachtungsrichtung, eines von einem Winkel von der Bildanzeigeeinrichtung (110) relativ zum Betrachter und einer Bewegungsrichtung der Bildanzeigeeinrichtung (110) relativ zum Betrachter; und
   Displayumschaltungs-Steuereinheit (105), operabel für Umschalten zwischen einem ersten Anzeigemodus und einem zweiten Anzeigemodus abhängig davon, ob der Betrachtungsabstand größer oder nicht größer ist als ein im Voraus festgelegter Abstand, und zum Anzeigen des Bildes des Subjekts entsprechend einem des ersten Anzeigemodus und des zweiten Anzeigemodus, wobei der erste Anzeigemodus eine Vergrößerung der Anzeige auf Basis des Betrachtungsabstands verändert und das Bild des Subjekts anzeigt, und der zweite Anzeigemodus Bilder mit unterschiedlichen Neigungen in Bezug auf die Normale zur Fläche des Subjekts auf Basis der Betrachtungsrichtung anzeigt.

2. Bildanzeigeeinrichtung (110) nach Anspruch 1, ferner aufweisend
   eine Näherungsstatus-Erkennungseinheit (104), operabel für Berechnen einer Anzeigevergrößerung des Bildes auf Basis des Betrachtungsabstands.

3. Bildanzeigeeinrichtung (110) nach Anspruch 2,
   wobei die Näherungsstatus-Erkennungseinheit (104) operabel für Berechnen der Anzeigevergrößerung (a) als eine Vergrößerung durch Annahme, dass sich das Subjekt, in einem Fall, wenn der Betrachtungsabstand nicht größer ist als der im Voraus festgelegte Abstand, auf dem im Voraus festgelegten Abstand befindet, und (b) als kleiner als eine Vergrößerung durch Annahme, das sich das Subjekt, in einem Fall, wenn der Betrachtungsabstand größer ist als der im Voraus festgelegte Abstand, hinter dem im Voraus festgelegten Abstand befindet, und
   die Displayumschaltungs-Steuereinheit (105), operabel für Anzeigen des Bildes des Subjekts im ersten Anzeigemodus in einem Fall, wenn die von der Näherungsstatus-Erkennungseinheit (104) berechnete Anzeigevergrößerung geringer ist als eine Vergrößerung, und für Anzeigen des Bildes des Subjekts im zweiten Anzeigemodus in einem Fall, wenn die Anzeigevergrößerung eine Vergrößerung ist.

4. Bildanzeigeeinrichtung (110) nach Anspruch 1,
wobei, im ersten Anzeigemodus, die Displayumschaltungs-Steuereinheit (105) operabel für Wählen eines Bildes eines Teils des Subjekts auf Basis der Anzeigevergrößerung und der Betrachtungsrichtung ist und für Anzeigen des gewählten Bildes.

5. Bildanzeigeeinrichtung (110) nach Anspruch 4,
wobei der Teil des Subjekt einer von im Voraus festgelegten Bereiche ist, und
im ersten Anzeigemodus die Displayumschaltungs-Steuereinheit (105) operabel für Wählen eines Bildes im Bereich unter mehreren Bereichen auf Basis der Betrachtungsrichtung und der Anzeigevergrößerung ist und für Anzeigen des gewählten Bildes.

6. Bildanzeigeeinrichtung (110) nach Anspruch 5, ferner aufweisend
im ersten Anzeigemodus eine Marker-Erzeugungseinheit (108), operabel für Anzeigen eines ersten Markers, der einen der im Voraus festgelegten Bereiche anzeigt, und eines zweiten Markers auf Basis der Betrachtungsrichtung und der Anzeigevergrößerung,
wobei die Displayumschaltungs-Steuereinheit (105) operabel für Wählen eines Bereichs unter den mehreren Bereichen in Abhängigkeit vom Positionsverhältnis des ersten Markers und des zweiten Markers ist.

7. Bildanzeigeeinrichtung (110) nach Anspruch 6,
wobei die Marker-Erzeugungseinheit operabel für Überlagern des ersten Markers auf einem gesamten Bild des Subjekts im Voraus und für Anzeigen des überlagerten Bildes ist.

8. Bildanzeigeeinrichtung (110) nach Anspruch 6,
wobei die Marker-Erzeugungseinheit operabel ist für Überlagern des ersten Markers auf einem gesamten Bild des Subjekts in einem Fall, wenn sich der zweite Marker dem vom ersten Marker angegebenen Bereich nähert, und für Anzeige des überlagerten Bildes.

9. Bildanzeigeeinrichtung (110) nach Anspruch 1,
wobei die Displayumschaltungs-Steuereinheit (105) operabel ist für Anzeigen, im zweiten Anzeigemodus, von Bildern mit unterschiedlichen Neigungen in Bezug auf die Normale zur Fläche des Subjekts auf Basis der Betrachtungsrichtung und eines Beleuchtungszustands.

10. Bildanzeigeeinrichtung (110) nach Anspruch 1,
wobei die Displayumschaltungs-Steuereinheit (105) operabel ist für Anzeigen, im zweiten Anzeigemodus, eines Bildes, das durch Neigen der Richtung der Normalen zur Fläche des Subjekts in zwei Freiheitsgraden unter einer festen Beleuchtung gezeigt wird.

11. Bildanzeigeeinrichtung (110) nach Anspruch 1,
wobei die Displayumschaltungs-Steuereinheit (105) operabel ist für Anzeigen, im zweiten Anzeigemodus, eines Computergrafikbildes, wobei das Computergrafikbild durch Rendern eines optischen Modells, das eines von Reflektion, Streuung und Übertragung von Licht auf die Fläche des Subjekts erzeugt wird, und wobei das Rendering unter einer festen Beleuchtung einer Fläche von einer oder einer beliebigen Ebene und einer gekrümmten Fläche ausgeführt wird.

12. Bildanzeigeeinrichtung (110) nach Anspruch 11,
wobei das optische Modell ein Modell ist, das durch Anwenden einer von der bidirektionalen Reflektanzverteilungsfunktion der Subjektfläche, der bidirektionalen Flächenstreuungsfunktion der Subjektfläche und der Texturfunktion der Subjektfläche berechnet wird, und
die Displayumschaltungs-Steuereinheit (105) operabel ist, im zweiten Anzeigemodus, für Anzeigen eines Computergrafikbildes, wobei das Computergrafikbild durch Rendering des optischen Modells erzeugt wird, und das Rendering unter fester Beleuchtung auf eine Fläche von einer beliebigen Ebene und einer gekrümmten Fläche aufgeführt wird.

13. Bildanzeigeeinrichtung (110) nach Anspruch 11,
wobei das optische Modell ein Modell ist, das durch Berechnen unter Anwenden einer der bidirektionalen Reflektanzverteilungsfunktion der Subjektfläche unter Anwenden des Betrachtungsabstands als ein Parameter, der bidirektionalen Flächenstreuungsfunktion der Subjektfläche unter Anwenden des Betrachtungsabstands als ein Parameter und der Texturfunktion der Subjektfläche unter Anwenden des Betrachtungsabstands als ein Parameter berechnet wird, und

die Displayumschaltungs-Steuereinheit (105) operabel ist, im zweiten Anzeigemodus, für Anzeigen eines Computergrafikbildes, wobei das Computergrafikbild durch Rendering des optischen Modells erzeugt wird, und das Rendering unter fester Beleuchtung auf eine Fläche von einer beliebigen Ebene und einer gekrümmten Fläche aufgeführt wird.

**14.** Bildanzeigeeinrichtung (110) nach Anspruch 1,

wobei die Displayumschaltungs-Steuereinheit (105) operabel ist für Anzeigen, im zweiten Anzeigemodus, eines vergrößerten Bildes des Subjekts auf Basis des Betrachtungsabstands.

**15.** Bildanzeigesystem für Anzeigen auf einer Bildanzeigeeinrichtung (110) eines Bildes eines Subjekts, das in einer Servereinrichtung gespeichert ist, aufweisend:

eine Bildanzeigeeinrichtung (110) nach Anspruch 1, und

eine Send-/Empfangseinheit, operabel für Senden eines Bildanforderungssignals an die Servereinrichtung auf Basis der Anforderung, und für Empfangen eines Bildes auf Basis des Bildanforderungssignals über ein Netzwerk,

wobei die Servereinrichtung, an die das Netzwerk angeschlossen ist, Folgendes aufweist:

eine Subjektdatenbank, in der das gesamte Bild des Subjekts gespeichert ist, und die das Bild auf Basis des Bildanforderungssignals sendet;

eine Vergrößerungsbild-Datenbank, in der ein Bild als ein Teil eines Subjekts entsprechend einer Anzeigevergrößerung gespeichert ist, und die das Bild auf Basis des Bildanforderungssignals sendet; und

eine Neigungsvariations-Nahbild-Datenbank, in der ein Neigungsvariations-Nahbild gespeichert ist, das durch Neigen in der Richtung zur Normalen erzeugt wird, wobei das Bild ein Teil des Subjekts ist, und die das Bild auf Basis des Bildanforderungssignals sendet.

**16.** Bildanzeigesystem nach Anspruch 15,

wobei die Servereinrichtung ferner aufweist:

eine BTG-Datenbank, in der eine bidirektionale Texturfunktion für das Bild als ein Teil des Subjekts gespeichert ist.

**17.** Bildanzeigesystem nach Anspruch 15,

wobei die Servereinrichtung ferner aufweist:

eine abstandsvariable BTF-Datenbank, in der die bidirektionale Texturfunktion für das Bild des Teils des Subjekts unter Anwenden des Betrachtungsabstands als einen Parameter gespeichert ist.

**18.** Bildanzeigesystem nach Anspruch 17,

wobei, in der Servereinrichtung, die bidirektionale Texturfunktion für das Bild des Teils des Subjekts unter Anwenden der Variation des Betrachtungsabstands als der Parameter ist eine Funktion, die eine Position auf dem Subjekt für das Bild als den Teil des Subjekts, den Betrachtungsabstand, einen Beleuchtungswinkel und die Betrachtungsrichtung als Parameter benutzt.

**19.** Bildanzeigeverfahren für Anzeigen eines Bildes eines Subjekts, aufweisend:

einen Abtastschritt für Ausgabe eines Signals für Erkennen eines Anwendungsstatus der Bildanzeigeeinrichtung (110) ;

einen Abstanderkennungsschritt für Erkennen, als ein Betrachtungsabstand, einen Abstand zwischen einem Betrachter und der Bildanzeigeeinrichtung (110);

einen Winkelerkennungsschritt für Erkennen, als eine Betrachtungsrichtung, eines Winkels der Bildanzeigeeinrichtung (110) im Verhältnis zum Betrachter, und einer Bewegungsrichtung der Bildanzeigeeinrichtung (110) im Verhältnis zum Betrachter; und

einen Displayumschaltungs-Steuerschritt für Umschalten zwischen einem ersten Anzeigemodus und einem zweiten Anzeigemodus abhängig davon, ob der Betrachtungsabstand größer oder nicht größer ist als ein im Voraus festgelegter Abstand, und zum Anzeigen eines Bildes des Subjekts entsprechend einem des ersten Anzeigemodus und des zweiten Anzeigemodus, wobei der erste Anzeigemodus eine Vergrößerung der Anzeige auf Basis des Betrachtungsabstands verändert und das Bild des Subjekts anzeigt, und der zweite Anzeigemodus Bilder mit unterschiedlichen Neigungen in Bezug auf die Normale zur Fläche des Subjekts auf Basis der Betrachtungsrichtung anzeigt,

wobei der Abstandserkennungsschritt, der Winkelerkennungsschritt und der Displayumschaltungs-Steuerschritt vom Bildanzeigegerät ausgeführt werden.

**Revendications**

1.  Dispositif d'affichage d'image (110) destiné à afficher une image d'un objet, comprenant :

    une unité de détection (101) servant à délivrer en sortie un signal pour détecter un état d'utilisation dudit dispositif d'affichage d'image (110) ;
    une unité de détection de distance (102) servant à détecter, comme distance de visualisation, une distance entre un observateur et ledit dispositif d'affichage d'image (110) ;
    une unité de détection d'angle (103) servant à détecter, comme direction de visualisation, l'un(e) d'un angle dudit dispositif d'affichage d'image (110) par rapport à l'observateur, et d'une direction de déplacement dudit dispositif d'affichage d'image (110) par rapport à l'observateur ; et
    une unité de commande de commutation d'affichage (105) servant à basculer entre un premier mode d'affichage et un deuxième mode d'affichage sur la base de la distance de visualisation étant supérieure à une distance prédéterminée ou ne dépassant pas celle-ci, et à afficher l'image de l'objet correspondant à l'un du premier mode d'affichage et du deuxième mode d'affichage, où le premier mode d'affichage change un agrandissement de l'affichage sur la base de la distance de visualisation, et affiche l'image de l'objet, et le deuxième mode d'affichage affiche des images avec différentes inclinaisons par rapport à la normale à la surface de l'objet sur la base de la direction de visualisation.

2.  Dispositif d'affichage d'image (110) selon la revendication 1, comprenant en outre
    une unité de détection d'état d'approche (104) servant à calculer un agrandissement de l'affichage de l'image sur la base de la distance de visualisation.

3.  Dispositif d'affichage d'image (110) selon la revendication 2,
    dans lequel ladite unité de détection d'état d'approche (104) sert à calculer l'agrandissement de l'affichage (a) comme un agrandissement, en supposant que l'objet se trouve à la distance prédéterminée, dans un cas où la distance de visualisation n'est pas supérieure à la distance prédéterminée, et (b) comme inférieur à un agrandissement, en supposant que l'objet se trouve au-delà de la distance prédéterminée, dans un cas où la distance de visualisation est supérieure à la distance prédéterminée, et
    ladite unité de commande de commutation d'affichage (105) sert à afficher l'image de l'objet dans le premier mode d'affichage dans un cas où l'agrandissement de l'affichage calculé par ladite unité de détection d'état d'approche est inférieur à un agrandissement, et à afficher l'image de l'objet dans le deuxième mode d'affichage dans un cas où l'agrandissement de l'affichage est un agrandissement.

4.  Dispositif d'affichage d'image (110) selon la revendication 1,
    dans lequel, dans le premier mode d'affichage, ladite unité de commande de commutation d'affichage (105) sert à sélectionner une image d'une partie de l'objet sur la base de l'agrandissement de l'affichage et de la direction de visualisation, et à afficher l'image sélectionnée.

5.  Dispositif d'affichage d'image (110) selon la revendication 4,
    dans lequel la partie de l'objet est l'une des zones prédéterminées, et
    dans le premier mode d'affichage, ladite unité de commande de commutation d'affichage (105) sert à sélectionner une image dans la zone parmi la pluralité de zones sur la base de la direction de visualisation et de l'agrandissement de l'affichage, et à afficher l'image sélectionnée.

6.  Dispositif d'affichage d'image (110) selon la revendication 5, comprenant en outre
    dans le premier mode d'affichage, une unité de génération de marqueur (108) servant à afficher un premier marqueur indiquant l'une des zones prédéterminées, et à afficher un deuxième marqueur sur la base de la direction de visualisation et de l'agrandissement de l'affichage,
    dans lequel ladite unité de commande de commutation d'affichage (105) sert à sélectionner une zone parmi la pluralité de zones en fonction d'une relation de position entre le premier marqueur et le deuxième marqueur.

**7.** Dispositif d'affichage d'image (110) selon la revendication 6,
dans lequel ladite unité de génération de marqueur sert à superposer à l'avance le premier marqueur sur une image complète de l'objet, et à afficher l'image superposée.

**8.** Dispositif d'affichage d'image (110) selon la revendication 6,
dans lequel ladite unité de génération de marqueur sert à superposer le premier marqueur sur une image complète de l'objet dans un cas où le deuxième marqueur se rapproche de la zone indiquée par le premier marqueur, et à afficher l'image superposée.

**9.** Dispositif d'affichage d'image (110) selon la revendication 1,
dans lequel ladite unité de commande de commutation d'affichage (105) sert à afficher, dans le deuxième mode d'affichage, des images avec différentes inclinaisons par rapport à la normale à la surface de l'objet sur la base de la direction de visualisation et d'une condition d'éclairage.

**10.** Dispositif d'affichage d'image (110) selon la revendication 1,
dans lequel ladite unité de commande de commutation d'affichage (105) sert à afficher, dans le deuxième mode d'affichage, une image représentée en inclinant la direction de la normale à la surface de l'objet à deux degrés de liberté sous un éclairage fixe.

**11.** Dispositif d'affichage d'image (110) selon la revendication 1,
dans lequel ladite unité de commande de commutation d'affichage (105) sert à afficher, dans le deuxième mode d'affichage, une image graphique d'ordinateur, l'image graphique d'ordinateur est générée en rendant un modèle optique qui décrit l'une d'une réflexion, d'une diffusion et d'une transmission de lumière sur la surface de l'objet, et le rendu est exécuté sous un éclairage fixe sur une surface de l'un(e) d'un plan arbitraire et d'une surface incurvée.

**12.** Dispositif d'affichage d'image (110) selon la revendication 11,
dans lequel le modèle optique est un modèle calculé en utilisant l'une de la fonction de distribution de réflectance bidirectionnelle de la surface de l'objet, de la fonction de distribution de diffusion de surface bidirectionnelle de la surface de l'objet et de la fonction de texture bidirectionnelle de la surface de l'objet, et
ladite unité de commande de commutation d'affichage (105) sert à afficher, dans le deuxième mode d'affichage, une image graphique d'ordinateur, l'image graphique d'ordinateur est générée en rendant le modèle optique, et le rendu est exécuté sous l'éclairage fixe sur une surface de l'un(e) d'un plan arbitraire et d'une surface incurvée.

**13.** Dispositif d'affichage d'image (110) selon la revendication 11,
dans lequel le modèle optique est un modèle calculé en utilisant l'une de la fonction de distribution de réflectance bidirectionnelle de la surface de l'objet utilisant une distance de visualisation comme paramètre, de la fonction de distribution de diffusion de surface bidirectionnelle de la surface de l'objet utilisant une distance de visualisation comme paramètre et de la fonction de texture bidirectionnelle de la surface de l'objet utilisant une distance de visualisation comme paramètre, et
ladite unité de commande de commutation d'affichage (105) sert à afficher, dans le deuxième mode d'affichage, une image graphique d'ordinateur, l'image graphique d'ordinateur est générée en rendant le modèle optique, et le rendu est exécuté sous un éclairage fixe sur une surface de l'un d'un(e) plan arbitraire et d'une surface incurvée.

**14.** Dispositif d'affichage d'image (110) selon la revendication 1,
dans lequel ladite unité de commande de commutation d'affichage (105) sert à afficher, dans le deuxième mode d'affichage, une image agrandie de l'objet sur la base de la distance de visualisation.

**15.** Système d'affichage d'image destiné à afficher sur un dispositif d'affichage d'image (110) une image d'un objet stocké dans un dispositif serveur, comprenant :

un dispositif d'affichage d'image (110) tel que défini dans la revendication 1, et
une unité d'envoi/réception servant à envoyer un signal de demande d'image audit dispositif serveur sur la base de la demande, et à recevoir une image sur la base du signal de demande d'image via un réseau,
ledit dispositif serveur auquel est connecté le réseau, comporte :

une base de données de l'objet qui stocke l'image complète de l'objet, et envoie l'image sur la base du signal de demande d'image ;
une base de données d'image agrandie qui stocke une image d'une partie d'un objet selon un agrandissement d'affichage, et envoie l'image sur la base du signal de demande d'image ; et
une base de données d'image en gros plan à variation d'inclinaison qui stocke une image en gros plan à variation d'inclinaison générée en inclinant, par rapport à la direction de la normale, l'image de la partie de l'objet, et envoie l'image sur la base du signal de demande d'image.

**16.** Système d'affichage d'image selon la revendication 15,
dans lequel ledit dispositif serveur comporte en outre une base de données BTF qui stocke une fonction de texture bidirectionnelle pour l'image de la partie de l'objet.

**17.** Système d'affichage d'image selon la revendication 15,
dans lequel ledit dispositif serveur comporte en outre
une base de données BTF à distance variable qui stocke la fonction de texture bidirectionnelle pour l'image de la partie de l'objet utilisant une variation de la distance de visualisation comme paramètre.

**18.** Système d'affichage d'image selon la revendication 17
dans lequel, dans ledit dispositif serveur, la fonction de texture bidirectionnelle pour l'image de la partie de l'objet utilisant la variation de la distance de visualisation comme paramètre est une fonction utilisant une position sur l'objet pour l'image de la partie de l'objet, la distance de visualisation, un angle d'éclairage et la direction de visualisation comme paramètres.

**19.** Procédé d'affichage d'image destiné à afficher une image d'un objet, comprenant :

une étape de détection qui consiste à délivrer en sortie un signal pour détecter un état d'utilisation dudit dispositif d'affichage d'image (110) ;
une étape de détection de distance qui consiste à détecter, comme distance de visualisation, une distance entre un observateur et ledit dispositif d'affichage d'image (110) ;
une étape de détection d'angle qui consiste à détecter, comme direction de visualisation, l'un(e) d'un angle dudit dispositif d'affichage d'image (110) par rapport à l'observateur, et d'une direction de déplacement dudit dispositif d'affichage d'image (110) par rapport à l'observateur ; et
une étape de commande de commutation d'affichage qui consiste à basculer entre un premier mode d'affichage et un deuxième mode d'affichage sur la base de la distance de visualisation étant supérieure à une distance prédéterminée ou ne dépassant pas celle-ci, et à afficher une image de l'objet correspondant à l'un du premier mode d'affichage et du deuxième mode d'affichage, où le premier mode d'affichage change un agrandissement d'affichage sur la base de la distance de visualisation et affiche l'image de l'objet, et le deuxième mode d'affichage affiche des images avec différentes inclinaisons par rapport à la normale à la surface de l'objet sur la base de la direction de visualisation,
dans lequel ladite étape de détection de distance, ladite étape de détection d'angle et ladite étape de commande de commutation d'affichage sont exécutées par l'appareil d'affichage d'image.

FIG. 1

# FIG. 2

Image display device — 110

Input of usage condition →

Sensor unit — 101

Distance detecting unit — 102

Angle detecting unit — 103

Approaching state detecting unit — 104

Marker generating unit — 108

Display switching controlling unit — 105

Sending/receiving unit — 111

Image display unit — 109

— 112

Subject database — 113

Magnified image database — 106

Tilt variation close-up image database — 107

## FIG. 3A

## FIG. 3B

# FIG. 4

FIG. 5A

401

FIG. 5D

FIG. 5B

304

FIG. 5E

FIG. 5C

402

# FIG. 6

## FIG. 7

```
                    Start
                      │
                      ▼         ╭─S601
        ┌────────────────────────────┐
        │ Distance detecting unit    │
        │ measures viewing distance Z│
        └────────────────────────────┘
                      │
                      ▼         ╭─S602
        ┌────────────────────────────┐
        │    Angle detecting unit    │
        │     measures angle         │
        └────────────────────────────┘
                      │
                      ▼         ╭─S603
               ╱────────────╲              YES
              ╱  Display      ╲──────────────────────────┐
              ╲ magnification<1╱                         │
               ╲────────────╱                            ▼         ╭─S606
                   │ NO    ╭─S604                ┌──────────────────────────┐
                   ▼                             │  Marker generating unit  │
        ┌────────────────────────────┐          │  shows marker and so on  │
        │ Display switching controlling│        └──────────────────────────┘
        │ unit searches tilt variation │                     │
        │ close-up image database      │                     ▼         ╭─S607
        │ using (Δψ, Δθ)               │        ┌──────────────────────────┐
        └────────────────────────────┘         │ Display switching controlling│
                   │       ╭─S605                │ unit calculates (Δx, Δy) from│
                   ▼                             │ (Δψ, Δθ) and determines     │
        ┌────────────────────────────┐          │ approaching area            │
        │  Display the maximum       │          └──────────────────────────┘
        │  close-up image on         │                     │         ╭─S608
        │  image display unit        │                     ▼
        └────────────────────────────┘          ┌──────────────────────────┐
                   │                             │ Display switching controlling│
                   │                             │ unit searches magnified   │
                   │                             │ image database            │
                   │                             └──────────────────────────┘
                   │                                        │         ╭─S609
                   │                                        ▼
                   │                             ┌──────────────────────────┐
                   │                             │ Display magnified image   │
                   │                             │ in approaching process    │
                   │                             │ on image display unit     │
                   │                             └──────────────────────────┘
                   │                                        │
                   └────────────────────────────────────────┘
```

27

## FIG. 8

FIG. 9

$\psi$

## FIG. 10

FIG. 11

FIG. 12A

FIG. 12B

FIG. 12C

## FIG. 13

## FIG. 14

Start

S601

Distance detecting unit
measures viewing distance Zd

S602

Angle detecting unit
measures angle

S603

Display magnification<1

YES

NO — S1201

S606

Marker generating unit
shows marker and so on

Lighting direction detecting
unit measures illuminant of
viewing lighting ,and lighting
detecting unit measures
angle of viewing lighting

S607

Display switching controlling
unit calculates ($\Delta$x, $\Delta$y) from
($\Delta \psi$, $\Delta \theta$) and determines
approaching area

S1202

Display switching controlling
unit searches BTF database
using ($\Delta \psi$, $\Delta \theta$)

S608

Display switching controlling
unit searches magnified
image database

S1203

Display switching controlling
unit generates surface for
mapping

S609

Display magnified image
in approaching process
on image display unit

S1204

Display the maximum
close-up image on
image display unit

# FIG. 15

1302

Image display device 101

Sensor unit

102 Distance detecting unit

103 Angle detecting unit

901 Lighting direction detecting unit

902 Illuminant detecting unit

104 Approaching state detecting unit

105 Display switching controlling unit

904 Rendering unit

110 Sending/ receiving unit

108 Marker generating unit

109 Image display unit

112

113 Subject database

106 Magnified image database

107 Tilt variation close-up image database

1301 Distance changeable BTF database

FIG. 16

# FIG. 17

α =22.5°

1101

α =45°

704

1501

Δ ψ

Δ θ

702

707

β

703    1102

Z axis

X axis

Y axis

1502

FIG. 18

Start

S601
Distance detecting unit measures viewing distance Zd

S602
Angle detecting unit measures angle

S603
Display magnification<1

YES →

NO → S1201
Lighting direction detecting unit measures illuminant of viewing lighting ,and lighting detecting unit measures angle of viewing lighting

Display magnification>1

YES →

NO → S1202
Approaching state detecting unit searches BTF database using ($\Delta \psi$, $\Delta \theta$)

S1602
Display switching controlling unit searches DBTF database using ($\Delta \psi$, $\Delta \theta$, $\Delta Z$)

S1203
Display switching controlling unit generates surface for mapping

S1204
Display the maximum close-up image on image display unit

S606
Marker generating unit shows marker and so on

S607
Display switching controlling unit calculates ($\Delta x$, $\Delta y$) from ($\Delta \psi$, $\Delta \theta$) and determines approaching area

S608
Display switching controlling unit searches magnified image database

S609
Display magnified image in approaching process on image display unit

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002007027 A
- JP 2000066802 A
- JP 2003132350 A
- US 20020140666 A

**Non-patent literature cited in the description**

- **TOMOYA NARITA ; YU SHIBUYA ; YOSHIHIRO TSUJINO.** Display system possible to perform view control by user's view. *Human Interface Society report,* vol. 3 (3), 11-14